# EUROPÄISCHE PATENTANMELDUNG

(11) **EP 3 166 059 A1**
(43) Veröffentlichungstag der Anmeldung: **10.05.2017**
(21) Anmeldenummer: 16196238.6
(22) Anmeldetag: 28.10.2016
(51) Int. Cl.: G06Q 10/08, G06Q 50/32, G06Q 20/32

(54) **VORZEITIGE AUSLÖSUNG DES BEZAHLPROZESSES FÜR NACHNAHME-SENDUNGEN**

(30) Priorität: 05.11.2015 DE 102015118999
(71) Anmelder: Deutsche Post AG, 53113 Bonn (DE)
(72) Erfinder: WIECHERS, Ralph, 53508 Mayschoß (DE)
(74) Vertreter: Cohausz & Florack

(57) **Zusammenfassung**

Offenbart wird u.a. ein erstes Verfahren, das folgendes umfasst: Erhalten von erster Information, aus der folgt, dass sich eine Position einer Sendung relativ zu einer vorbestimmten Station aus einer Abfolge von Stationen, an die die Sendung während eines Zustellungsprozesses der Sendung jeweils gelangt, geändert hat oder dass eine Änderung der Position der Sendung relativ zu der vorbestimmten Station erfolgen soll, wobei die Sendung eine noch nicht bezahlte Ware enthält; und Auslösen eines Prozesses, in welchem einer Person Gelegenheit gegeben wird, eine Bezahlung der Ware vorzunehmen, in Reaktion auf das Erhalten der ersten Information. Offenbart wird ferner ein zweites Verfahren, umfassend: Erzeugen von erster Information, aus der folgt, dass sich eine Position einer Sendung relativ zu einer vorbestimmten Station aus einer Abfolge von Stationen, an die die Sendung während eines Zustellungsprozesses der Sendung jeweils gelangt, geändert hat oder dass eine Änderung der Position der Sendung relativ zu der vorbestimmten Station erfolgen soll, wobei die Sendung eine noch nicht bezahlte Ware enthält; und Ausgeben der ersten Information an eine Vorrichtung, die eingerichtet ist, einen Prozess, in welchem einer Person Gelegenheit gegeben wird, eine Bezahlung der Ware vorzunehmen, in Reaktion auf ein Erhalten der ersten Information auszulösen. Offenbart werden ferner eine Vorrichtung zur Ausführung und/oder Steuerung des ersten oder zweiten Verfahrens, ein System mit einer oder mehreren Vorrichtungen zur Ausführung und/oder Steuerung des ersten und/oder zweiten Verfahrens und ein Computerprogramm zur Ausführung und/oder Steuerung des ersten oder zweiten Verfahrens durch einen Prozessor.

## Beschreibung

### Gebiet

Beispielhafte Ausführungsformen der Erfindung betreffen die Auslösung eines Prozesses, in dem einer Person Gelegenheit gegeben wird, eine Bezahlung einer in einer Sendungen enthaltenen Ware vorzunehmen, insbesondere vor der Zustellung der Sendung.

### Hintergrund

Neben Bezahlungsverfahren wie Kreditkartenzahlung, Zahlung auf Rechnung, per Überweisung oder per Lastschrift erfreut sich die Nachnahme im Versandhandel wachsender Beliebtheit. Bei der Bezahlung per Nachnahme wird bestellte Ware erst im Zeitpunkt der Zustellung der die Ware enthaltenden Sendung beim Empfänger bezahlt. Unter einem Empfänger einer Sendung wird in der vorliegenden Spezifikation eine Person verstanden, für die die Sendung bestimmt ist. Es kann sich dabei insbesondere um den Käufer der Ware und/oder den Adressaten der Sendung (der beispielsweise in einer Lieferadresse der Sendung spezifiziert oder anderweitig mit der Sendung assoziiert wurde, beispielsweise mittels einer Datenbank) handeln. Die Zahlung wird im Zeitpunkt der Zustellung der Sendung vom Empfänger an den Zusteller geleistet, der die Sendung mit der Ware erst bei vollständiger Entrichtung der Zahlung an den Empfänger aushändigt und die erhaltene Zahlung dann später an den Versender der Ware weiterleitet.

Die Zahlung per Nachnahme ist für den Käufer einer Ware insoweit vorteilhaft, als die Zahlung erst dann geleistet werden muss, wenn die Sendung tatsächlich erhalten wird, also das Risiko, dass trotz geleisteter Zahlung keine Ware erhalten wird, ausgeschlossen werden kann. Aus Sicht des Verkäufers besteht gegenüber Zahlungsvarianten wie Zahlung auf Rechnung oder Lastschrift der Vorteil, dass das Risiko, dass eine ausgelieferte Ware nicht bezahlt oder eine diesbezügliche Lastschrift vom Käufer widerrufen wird, nicht besteht.

### Zusammenfassung einiger beispielhafter Ausführungsformen der Erfindung

Bei der Zahlung per Nachnahme ist das Kassieren durch den Zusteller im Zeitpunkt der Zustellung sowohl für den Zusteller als auch den Empfänger der Sendung zeitaufwändig und umständlich. Darüber hinaus kann die Sendung nur dann zugestellt werden, wenn der Empfänger zu Hause ist oder der Zusteller eine andere Person antrifft, beispielsweise einen Nachbarn des Empfängers, der allerdings nicht nur zur Entgegenahme der Sendung bereit sein muss, sondern auch vom Empfänger informiert sein muss, ob dieser die Sendung überhaupt erhalten möchte und dann entsprechend anstelle des Empfängers die Zahlung an den Zusteller leisten muss.

Bei Zahlung von Sendungen per Nachnahme, die an einen Aufbewahrungsraum zur Entnahme durch den Empfänger zugestellt werden, ergibt sich der weitere Nachteil, dass die Einheit (z.B. eine Packstation), in der der Aufbewahrungsraum untergebracht ist, entweder über Personal oder entsprechende technische Einrichtungen zur Entgegennahme von Zahlungen verfügen muss, damit der Empfänger die Ware bei Abholung aus dem Aufbewahrungsraum bezahlen kann.

Es ist daher unter anderem eine Aufgabe der vorliegenden Erfindung, die Nachteile des bekannten Nachnahme-Verfahrens zu beseitigen. Insbesondere sollen dabei technische Möglichkeiten identifiziert werden, wie der Bezahlungsprozess bereits vor der Zustellung an einer Zustellungsadresse (oder der Abholung aus einem Aufbewahrungsraum) ausgelöst und durchgeführt werden kann, so dass er im Zeitpunkt der Zustellung (oder der Abholung der Ware aus einem Aufbewahrungsraum) bereits abgeschlossen ist.

Gemäß einem ersten beispielhaften Aspekt der Erfindung wird ein Verfahren offenbart, das folgendes umfasst:
- Erhalten von erster Information, aus der folgt, dass sich eine Position einer Sendung relativ zu einer vorbestimmten Station aus einer Abfolge von Stationen, an die die Sendung während eines Zustellungsprozesses der Sendung jeweils gelangt, geändert hat oder dass eine Änderung der Position der Sendung relativ zu der vorbestimmten Station erfolgen soll, wobei die Sendung eine noch nicht bezahlte Ware enthält; und
- Auslösen eines Prozesses, in welchem einer Person Gelegenheit gegeben wird, eine Bezahlung der Ware vorzunehmen, in Reaktion auf das Erhalten der ersten Information.

Gemäß einem zweiten beispielhaften Aspekt der Erfindung wird ein Verfahren offenbart, das folgendes umfasst:
- Erzeugen von erster Information, aus der folgt, dass sich eine Position einer Sendung relativ zu einer vorbestimmten Station aus einer Abfolge von Stationen, an die die Sendung während eines Zustellungsprozesses der Sendung jeweils gelangt, geändert hat oder dass eine Änderung der Position der Sendung relativ zu der vorbestimmten Station erfolgen soll, wobei die Sendung eine noch nicht bezahlte Ware enthält; und
- Ausgeben der ersten Information an eine Vorrichtung, die eingerichtet ist, einen Prozess, in welchem einer Person Gelegenheit gegeben wird, eine Bezahlung der Ware vorzunehmen, in Reaktion auf ein Erhalten der ersten Information auszulösen.

Für die Verfahren gemäß dem ersten und zweiten Aspekt der Erfindung wird des weiteren jeweils eine Vorrichtung offenbart (und nachfolgend als Vorrichtung gemäß dem ersten bzw. zweiten Aspekt der Erfindung bezeichnet), die zur Ausführung und/oder Steuerung des jeweiligen Verfahrens eingerichtet ist oder jeweilige Mittel zur Ausführung und/oder Steuerung der Schritte des jeweiligen Verfahrens umfasst. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden. Ein oder mehrere der Mittel können auch durch die gleiche Einheit ausgeführt und/oder gesteuert werden. Beispielsweise können ein oder mehrere der Mittel durch einen oder mehrere Prozessoren gebildet sein.

Für die Verfahren gemäß dem ersten und zweiten Aspekt der Erfindung wird des weiteren jeweils eine Vorrichtung offenbart (und nachfolgend als Vorrichtung gemäß dem ersten bzw. zweiten Aspekt der Erfindung bezeichnet), die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das jeweilige Verfahren auszuführen und/oder zu steuern. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden.

Bei der Vorrichtung gemäß dem ersten Aspekt der Erfindung kann es sich beispielsweise um einen Server handeln. Der Server kann beispielsweise im Back-End eines Zustellungsunternehmens integriert sein. Bei der Vorrichtung gemäß dem zweiten Aspekt der Erfindung kann es sich beispielsweise um eine Erfassungs- und/oder Kommunikationseinheit handeln, die an der vorbestimmten Station installiert ist oder von einer Bedienperson (insbesondere einem Zusteller) an der vorbestimmten Station verwendet wird.

Für die Verfahren gemäß dem ersten und zweiten Aspekt der Erfindung wird des weiteren jeweils ein System offenbart (und nachfolgend als System gemäß dem ersten bzw. zweiten Aspekt der Erfindung bezeichnet), das eine oder mehrere Vorrichtungen umfasst, die eingerichtet sind zur Ausführung und/oder Steuerung des jeweiligen Verfahrens oder Mittel zur Ausführung und/oder Steuerung der Schritte des jeweiligen Verfahrens aufweisen. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden.

Ferner wird ein System offenbart, das zumindest eine Vorrichtung gemäß dem ersten Aspekt der Erfindung und eine Vorrichtung gemäß dem zweiten Aspekt der Erfindung umfasst.

Für die Verfahren gemäß dem ersten und zweiten Aspekt der Erfindung wird des weiteren jeweils ein Computerprogramm offenbart (und nachfolgend als Computerprogramm gemäß dem ersten bzw. zweiten Aspekt der Erfindung bezeichnet), das Programmanweisungen umfasst, die einen Prozessor zur Ausführung und/oder Steuerung des jeweiligen Verfahrens veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des jeweiligen Verfahrens gesteuert werden, oder alle Schritte des jeweiligen Verfahrens ausgeführt werden, oder ein oder mehrere Schritte gesteuert und ein oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium ist beispielsweise gegenständlich, also greifbar, und/oder nicht-transitorisch.

Beispielhafte Ausführungsformen aller Aspekte der vorliegenden Erfindung weisen einzelne oder alle der nachfolgend beschriebenen Eigenschaften auf.

Ein Prozess, in dem einer Person, insbesondere einem Käufer einer Ware und/oder einem Empfänger einer Sendung, die eine noch nicht bezahlte Ware enthält, Gelegenheit gegeben wird, die Ware zu bezahlen, wird in Reaktion auf erhaltene erste Information ausgelöst. Bei der Sendung handelt es sich beispielsweise um einen Brief (insbesondere einen Brief mit darin enthaltener Ware, z.B. einem Buch), ein Päckchen oder ein Paket. Aus der ersten Information folgt, dass sich eine Position einer Sendung relativ zu einer vorbestimmten Station aus einer Abfolge von Stationen, an die die Sendung während eines Zustellungsprozesses der Sendung gelangt, geändert hat oder dass eine Änderung der Position relativ zu der vorbestimmten Station erfolgen soll. Aus der erster Information folgt beispielsweise, dass die Sendung die vorbestimmte Station erreicht oder nahezu erreicht oder verlassen hat oder von dieser Station entfernt werden soll. Die letzte Station der Abfolge von Stationen kann beispielsweise die durch die Zustellungsadresse der Sendung spezifizierte Station sein, bei der es sich beispielsweise um eine Adresse des Wohn- oder Geschäftssitzes des Empfängers der Sendung, um die Adresse eines Aufbewahrungsraums (z.B. einer Packstation) oder einer Aufbewahrungsstelle (z.B. eines Paketshops, eines Lotto-Toto-Kiosks, einer Einzelhandelsfiliale, einer Tankstelle, eines Restaurants, etc.), aus dem bzw. von der die Sendung beispielsweise vom Empfänger abholbar ist, oder um die Adresse eines Lagers, in dem die Sendung zwischengelagert und dann durch einen Dienstleister insbesondere gemäß Terminwünschen des Empfängers an diesen geliefert werden kann, handeln kann. Der Zustellungsprozess kann insbesondere mit der Zustellung der Sendung an der Zustellungsadresse abgeschlossen sein, beispielsweise zumindest aus Sicht eines Zustellungsunternehmens, das für die Zustellung bis zur Zustellungsadresse verantwortlich ist.

Beispiele für die vorbestimmte Station sind beispielsweise eine Sortierstation, die von Sendungen während des Zustellungsprozesses passiert wird, oder ein Aufbewahrungsraum (beispielsweise in einer Packstation) oder eine Aufbewahrungsstelle (z.B. ein Paketshop), in das bzw. an die eine Sendung zur Abholung durch den Empfänger zugestellt wird, oder ein Lager für Sendungen, in das eine Sendung durch einen Zusteller zur späteren Lieferung an den Empfänger - insbesondere durch einen anderen Dienstleister als den Dienstleister, für den der Zusteller tätig ist, insbesondere gemäß einem vom Empfänger mitgeteilten Zeitpunkt oder Zeitraum - zugestellt wird, oder auch die Adresse (insbesondere der Wohnsitz oder der Geschäftssitz der Person, wie sie beispielsweise in einer Lieferadresse angegeben ist), an der die Sendung zugestellt werden soll.

Vorteilhaft wird also die erfolgte oder bevorstehende Positionsänderung der Sendung relativ zur vorbestimmten Station zum Auslösen des Prozesses, in dem die Person die Ware bezahlen kann, genutzt. Diese erfolgten oder bevorstehenden relativen Positionsänderungen können beispielsweise mit Sensoren oder Prozessoren erfasst werden, insbesondere an den vorbestimmten Stationen (insbesondere durch die Vorrichtung gemäß dem zweiten Aspekt der Erfindung, oder eine damit operativ verbundene Vorrichtung, wobei die Vorrichtung gemäß dem zweiten Aspekt der Erfindung dann beispielsweise an der vorbestimmten Station installiert ist oder dort von Bedienpersonal (z.B. einem Zusteller) eingesetzt wird).

Erste Information, aus der solche erfolgten oder bevorstehenden relativen Positionsänderungen folgen, also beispielsweise explizit durch die erste Information zum Ausdruck gebracht werden oder aus der ersten Information ableitbar sind, wird gemäß dem zweiten Aspekt der Erfindung erzeugt und ausgegeben, um dann gemäß dem ersten Aspekt der Erfindung erhalten und als Auslöser des Prozesses, in dem die Person die Ware bezahlen kann, genutzt zu werden.

Die erste Information kann eine Information umfassen, die die Sendung explizit als Sendung charakterisiert, die eine noch nicht bezahlte Sendung enthält, oder kann keine derartige explizite Information enthalten. In letzterem Fall kann beispielsweise eine in der ersten Information enthaltene Kennung der Sendung als Index in eine Datenbank verwendet werden, die dann Aufschluss darüber gibt, ob es sich bei der Sendung um eine Sendung handelt, die eine noch nicht bezahlte Ware enthält oder nicht.

Die erste Information kann beispielsweise eine Kennung der Sendung umfassen. Sie kann weiterhin Information zu einer Vorrichtung, von der die erste Information erzeugt wurde und/oder mit der Daten einer Sendung erfasst wurden, auf der die erste Information zumindest teilweise beruht, umfassen, beispielsweise eine Kennung oder den Standort der Vorrichtung. Die erste Information kann zusätzlich oder alternativ Information (z.B. eine Kennung oder einen Standort) zu einer mit der Vorrichtung assoziierten Station der Abfolge von Stationen umfassen. Die erste Information kann zusätzlich oder alternativ eine Information zum Zeitpunkt des Erzeugens der ersten Information und/oder zum Zeitpunkt des Erfassens der Daten der Sendung umfassen.

Wenn es sich bei der vorbestimmten Station nicht um die letzte Station der Abfolge von Stationen handelt, wird beispielsweise vorteilhaft der Prozess, in dem die Person die Ware bezahlen kann, frühzeitig ausgelöst, so dass die Bezahlung im Zeitpunkt der Zustellung der Ware bereits abgeschlossen ist und der Zusteller beispielsweise lediglich informiert werden muss, dass die Bezahlung der Ware erfolgt ist, aber insbesondere nicht mehr selbst kassieren muss. Wenn es sich bei der vorbestimmten Station um die letzte Station der Abfolge von Stationen handelt (beispielsweise die Adresse, an der die Sendung zugestellt werden soll), kann die erste Information besagen, dass das Erreichen dieser letzten Station unmittelbar bevorsteht, beispielsweise weil festgestellt wurde, dass der Abstand des Zustellers der Sendung zur letzten Station einen vordefinierten Wert unterschritten hat, oder dass die Sendung die vorbestimmte Station erreicht hat. Handelt es sich bei der vorbestimmten Station um den Wohnsitz oder Geschäftssitz der Person, kann die Person also rechtzeitig vor dem Eintreffen des Zustellers die Bezahlung der Ware erledigen. Handelt es sich bei der vorbestimmten Station um einen Aufbewahrungsraum, kann die Person insbesondere vor der Entnahme der Sendung aus dem Aufbewahrungsraum, die beispielsweise nur unter der Bedingung der erfolgten Zahlung zugelassen sein kann, die Bezahlung der Ware vornehmen.

Der Prozess, in dem der Person Gelegenheit gegeben wird, die Bezahlung der Ware vorzunehmen, beinhaltet beispielsweise die Kommunikation mit der Person, insbesondere über eine Anwendung auf einem Gerät (beispielsweise einem Computer oder Smartphone) der Person, oder über eine interaktive Webseite. Beispielsweise kann das Einverständnis der Person zur Vornahme der Zahlung eingeholt (beispielsweise auch unter Einräumung einer Bedenkzeit, innerhalb derer sich die Person entscheiden kann, ob die Zahlung vorgenommen werden soll) und bei vorliegendem Einverständnis die Bezahlung für die Person vorgenommen werden, beispielsweise basierend auf gespeicherter Zahlungsinformation der Person. Alternativ kann die Person bei der Vornahme der Bezahlung unterstützt werden. In Ausführungsbeispielen der Erfindung hat sich die Person bereiterklärt, dass sie im Rahmen des Prozesses, in dem der Person Gelegenheit gegeben wird, die Bezahlung der Ware vorzunehmen, kontaktiert werden darf.

Die Bezahlung basiert insbesondere auf einem Online-Bezahlungsverfahren, also insbesondere nicht auf Barzahlung. Das (Online-)Bezahlungsverfahren kann beispielsweise über ein Gerät der Person abgewickelt werden, ohne dass die Person eine Institution, insbesondere eine Bank, aufsuchen muss und ohne dass die Person ein körperliches Formular ausfüllen und an eine Institution, insbesondere eine Bank, absenden muss. Das (Online-)Bezahlungsverfahren beruht beispielsweise nicht auf dem Einsatz eines tragbaren Terminals des Zustellers, gegenüber dem die Person Zahlungsinformationen angibt und über das dann die Bezahlung abgewickelt wird (ggf. in Interaktion mit einem Server, insbesondere einer Bank, eines Kreditkartenunternehmens oder eines Zahlungsdienstleisters).

Die vorgenommene Bezahlung der Ware durch die Person kann beispielsweise Voraussetzung für die Übergabe der Sendung an den Empfänger durch den Zusteller, die Ausgabe der Sendung aus einem Aufbewahrungsraum oder die Zustellung der Sendung an eine Aufbewahrungsstelle (z.B. eine Einzelhandelsfiliale, eine Tankstelle, ein Restaurant, etc.), von der die Sendung durch den Empfänger abholbar ist, sein.

Die Bezahlung der Ware kann beispielsweise an den Versender der Sendung oder den Verkäufer der Ware gerichtet sein, also auf ein Konto des Versenders oder Verkäufers erfolgen, oder kann alternativ an einen Treuhänder oder einen Inkasso-Dienstleister, der die an ihn geleistete Zahlung dann an den Versender oder Verkäufer weiterleitet.

In beispielhaften Ausführungsformen der vorliegenden Erfindung wird also der Prozess, in dem eine Person die Ware bezahlen kann, (insbesondere automatisch) ausgelöst basierend auf mittels Sensoren oder Prozessoren bestimmten Ereignissen, die eine erfolgte oder bevorstehende Änderung der Position der Sendung mit der Ware relativ zu einer vorbestimmten Station betreffen, bevorzugt vor der eigentlichen Zustellung der Sendung, der Abholung der Sendung aus einem (insbesondere verschlossenen) Aufbewahrungsraum, in das die Sendung zugestellt wurde oder der Zustellung der Sendung an eine Aufbewahrungsstelle, von der die Sendung durch den Empfänger abholbar ist..

Idealerweise ist dann im Zeitpunkt der Zustellung einer Sendung oder der Abholung der Sendung aus einem Aufbewahrungsraum die Bezahlung bereits erfolgt, so dass beispielsweise kein Kassieren durch den Zusteller oder - im Falle eines Aufbewahrungsraums - kein Personal und keine technischen Einrichtungen zur Ermöglichung der Bezahlung am Ort des Aufbewahrungsraums erforderlich sein müssen. Darüber hinaus hat der Zusteller nach erfolgter Zahlung mehr Freiheitsgrade bei der Zustellung der Sendung. Wird der Empfänger beispielsweise nicht angetroffen, kann die Sendung bei einem Nachbarn hinterlegt werden, da die Zahlung ja erfolgt ist.

Die Person, die die Bezahlung vornimmt, ist im Zeitpunkt der Vornahme der Bezahlung der Ware zumindest sicher, dass die Ware vom Versender tatsächlich an das Zustellungsunternehmen übergeben wurde und sich im Zustellungsprozess befindet. Dies ist insbesondere dann vorteilhaft, wenn das Vertrauen der Person in das Zustellungsunternehmen höher ist als in den Versender, bei dem es sich bei jeder Sendung ja um eine andere Person oder Entität handeln kann.

In einer beispielhaften Ausführungsform aller Aspekte der Erfindung folgt aus der ersten Information, dass die Sendung die vorbestimmte Station erreicht hat, und die vorbestimmte Station ist die letzte Station der Abfolge von Stationen, insbesondere die Adresse, an der die Sendung zugestellt werden soll. Die Adresse kann beispielsweise mit der Sendung assoziiert, beispielsweise darauf codiert oder uncodiert vermerkt sein. Die Adresse kann beispielsweise den Wohn- oder Geschäftssitz der Person, oder den Ort eines Aufbewahrungsraums (z.B. einer Packstation) oder einer Aufbewahrungsstelle (z.B. eines Paketshops, einer Einzelhandelsfiliale, einer Tankstelle, eines Restaurants, etc.), oder den Ort eines Lagers (an dem die Sendung beispielsweise zwischengelagert und dann nach Terminwünschen des Empfängers von einem Dienstleister an den Empfänger geliefert wird) bezeichnen. Die erste Information kann beispielsweise unmittelbar nach einem Erfassen (z.B. durch einen Sensor oder Prozessor) oder einem Feststellen (z.B. durch eine Person), dass die Sendung die vorbestimmte Station erreicht hat, erzeugt und/oder erhalten werden. Das Erfassen kann beispielsweise Teil des Verfahrens gemäß dem zweiten Aspekt der Erfindung sein.

Die erste Information wird dann beispielsweise in Reaktion auf ein Erfassen von Daten der Sendung erzeugt (das beispielsweise ebenfalls Teil des Verfahrens gemäß dem zweiten Aspekt der Erfindung ist), wobei das Erfassen an der vorbestimmten Station mit einem Gerät eines Zustellers der Sendung erfolgt (das beispielsweise eine Vorrichtung gemäß dem zweiten Aspekt der Erfindung darstellt). Die Daten der Sendung umfassen beispielsweise zumindest eine Kennung der Sendung oder Informationen, die bei der Identifizierung der Sendung und/oder des Empfänger der Sendung und/oder von Zahlungsinformation der Person genutzt werden können. Die Daten der Sendung sind beispielsweise auf der Sendung aufgedruckt, z.B. codiert (z.B. als eindimensionaler oder zweidimensionaler Barcode) oder uncodiert, oder sind in einem mit der Sendung assoziierten elektronischen Speicherelement gespeichert. Das Gerät des Zustellers kann beispielsweise ein mobiles Gerät des Zustellers, beispielsweise ein Handscanner, sein. Das Gerät ist beispielsweise zur optischen Erfassung der Daten der Sendung eingerichtet. Das Gerät ist beispielsweise eingerichtet, die erfassten Daten oder die erste Information, die beispielsweise von dem Gerät basierend auf zumindest einem Teil der erfassten Daten erzeugt wird, an eine Vorrichtung zu übertragen, die das Verfahren gemäß dem ersten Aspekt der Erfindung ausführt.

Das Erfassen der Daten wird beispielsweise von dem Zusteller im Zeitpunkt der Zustellung vorgenommen. Beispielsweise wird die Erfassung der Daten vom Zusteller im Rahmen eines Prozesses vorgenommen, der dem Nachweis dient, dass der Zusteller die Sendung ordnungsgemäß zugestellt hat. In diesem Prozess wird beispielsweise auch eine Unterschrift des Empfängers als Quittung erfasst. Die in diesem Prozess ohnehin erfassten Daten der Sendung, oder zumindest ein Teil davon, können erfindungsgemäß vorteilhaft dazu verwendet werden, den Prozess auszulösen, in dem die Person die Bezahlung der Ware vornehmen kann. Die Bezahlung wird dabei in diesem Prozess vorzugsweise über ein Online-Bezahlungsverfahren abgewickelt, so dass die Notwendigkeit des Kassierens durch den Zusteller entfällt.

Der Prozess, in dem der Person Gelegenheit zur Bezahlung der Ware gegeben wird, wird dann also insbesondere aufgrund der Erfassung von Daten der Sendung durch ein Gerät des Zustellers ausgelöst, insbesondere im Zeitpunkt der Zustellung. Die Zustellung kann dabei unmittelbar an den Empfänger der Sendung erfolgen, oder in einen Aufbewahrungsraum (z.B. einer Packstation), aus dem die Sendung dann abgeholt werden kann, oder an eine Aufbewahrungsstelle, von der die Sendung vom Empfänger abgeholt werden kann, oder in ein Lager, aus dem die Sendung dann - insbesondere durch einen anderen Dienstleister als den Dienstleister, für den der Zusteller tätig ist - an den Empfänger geliefert wird, insbesondere nach dem Dienstleister mitgeteilten Terminvorstellungen des Empfängers.

In einer beispielhaften Ausführungsform aller Aspekte der Erfindung folgt aus der ersten Information, dass die Sendung die vorbestimmte Station nahezu erreicht hat, und die vorbestimmte Station ist die letzte Station der Abfolge von Stationen, insbesondere die Adresse, an der die Sendung zugestellt werden soll. Die Adresse kann beispielsweise mit der Sendung assoziiert, beispielsweise darauf codiert oder uncodiert vermerkt sein. Die Adresse kann beispielsweise den Wohn- oder Geschäftssitz der Person, oder den Ort eines Aufbewahrungsraums (z.B. einer Packstation), oder den Ort einer Aufbewahrungsstelle (z.B. eines Paketshops), oder den Ort eines Lagers (an dem die Sendung beispielsweise zwischengelagert und dann nach Terminwünschen des Empfängers von einem Dienstleister an den Empfänger geliefert wird) bezeichnen. Die erste Information kann beispielsweise unmittelbar nach einem Erfassen (z.B. durch einen Sensor oder Prozessor) oder einem Feststellen (z.B. durch eine Person), dass die Sendung die vorbestimmte Station nahezu erreicht hat, erzeugt und/oder erhalten werden. Das Erfassen kann beispielsweise Teil des Verfahrens gemäß dem zweiten Aspekt der Erfindung sein.

Beispielsweise hat die Sendung die vorbestimmte Station nahezu erreicht, wenn die Sendung in einen vorbestimmten Bereich, der die vorbestimmte Station enthält, eingetreten ist oder wenn der Abstand zwischen der Sendung und der vorbestimmten Station einen vordefinierten Wert unterschritten hat. Dies kann beispielsweise von einer Vorrichtung (insbesondere automatisch) erfasst werden, insbesondere von einer Vorrichtung gemäß dem zweiten Aspekt der Erfindung. Die erste Information wird beispielsweise erzeugt und/oder erhalten, wenn eine Vorrichtung (beispielsweise ein Sensor oder ein Prozessor) derartiges festgestellt hat.

Die erste Information wird also beispielsweise in Reaktion auf ein Erfassen des Eintritts der Sendung oder eines Zustellers der Sendung in einen die vorbestimmte Station enthaltenden vorbestimmten Bereich oder in Reaktion auf ein Erfassen, dass der Abstand der Sendung oder eines Zustellers der Sendung zu der vorbestimmten Station einen vorbestimmten Wert unterschritten hat, erzeugt.

Der Eintritt des Zustellers der Sendung in den vorbestimmten Bereich oder das Unterschreiten des vorbestimmten Werts durch den Abstand des Zustellers zu der vorbestimmten Station wird insbesondere durch ein dem Zusteller zugeordnetes Gerät, insbesondere ein tragbares Gerät des Zustellers (beispielsweise ein Handscanner oder ein Mobiltelefon) oder ein zumindest zeitweise in einem Fahrzeug des Zustellers installiertes Gerät, erfasst. Diese Geräte stellen jeweils Beispiele für eine Vorrichtung gemäß dem zweiten Aspekt der Erfindung dar.

Das Gerät ermittelt beispielsweise in regelmäßigen oder unregelmäßigen Abständen seine aktuelle Position und berechnet den jeweiligen Abstand zu der vorbestimmten Station. Wenn dieser Abstand unter den vorbestimmten Wert fällt, kann beispielsweise die erste Information erzeugt und an eine Vorrichtung, die das Verfahren gemäß dem ersten Aspekt der Erfindung ausführt, übertragen werden. Alternativ kann das Gerät bei Empfang eines (insbesondere reichweitenbegrenzten) Funksignals, das von einer am Ort der vorbestimmten Station befindlichen Vorrichtung ausgesendet wird, feststellen, dass der Eintritt des Zustellers der Sendung in den vorbestimmten Bereich oder das Unterschreiten des vorbestimmten Werts durch den Abstand des Zustellers zu der vorbestimmten Station stattgefunden hat. Die Vorrichtung kann beispielsweise Teil einer Brief- und/oder Paketkastenanlage mit einem oder mehreren Fächern zur Aufnahme von Sendungen auch bei Abwesenheit des Empfängers, eines Gebäudeautomatisierungs- oder -steuerungssystems, eines Zugangskontrollsystems für Gebäude oder Fahrzeuge, oder eines Türkommunikationssystem sein oder mit einer derartigen Anlage oder einem derartigen System operativ (drahtlos oder drahtgebunden) verbunden sein. Das Funksignal kann beispielsweise Informationen über die vorbestimmte Station beinhalten (beispielsweise eine Adresse der vorbestimmten Station und/oder eine Kennung), anhand derer das Gerät des Zustellers feststellen kann, dass das Funksignal von der vorbestimmten Station stammt. Das Funksignal wird beispielsweise in regelmäßigen Abständen ausgesendet. Zusätzlich oder alternativ kann das Funksignal bei Erkennung durch die Vorrichtung, dass sich das Gerät des Zustellers nähert, ausgesendet werden. Der Pegel des Funksignals ist beispielsweise so gewählt, dass das Funksignal zumindest (oder ausschließlich) in dem vorbestimmten Bereich von dem Gerät des Empfängers empfangen und ausgewertet werden kann.

Die erste Information kann beispielsweise zumindest eine Kennung der Sendung oder Information, die bei einer Identifizierung der Sendung und/oder des Empfängers der Sendung und/oder von Zahlungsinformation der Person genutzt werden kann, enthalten. Zusätzlich kann in der ersten Information beispielsweise eine Information über den Zeitpunkt, zu dem festgestellt wurde, dass der Abstand unter den vorbestimmten Wert gefallen ist, enthalten sein.

In einer beispielhaften Ausführungsform aller Aspekte der Erfindung folgt aus der ersten Information, dass die Sendung die vorbestimmte Station erreicht oder verlassen hat, und es handelt sich bei der vorbestimmten Station nicht um die letzte Station der Abfolge von Stationen und insbesondere nicht um die Adresse, an der die Sendung zugestellt werden soll. Die Adresse kann beispielsweise mit der Sendung assoziiert, beispielsweise darauf codiert oder uncodiert vermerkt sein. Die Adresse kann beispielsweise den Wohn- oder Geschäftssitz der Person, oder den Ort eines Aufbewahrungsraums (z.B. einer Packstation), oder den Ort einer Aufbewahrungsstelle (z.B. eines Paketshops), oder den Ort eines Lagers (an dem die Sendung beispielsweise zwischengelagert und dann nach Terminwünschen des Empfängers von einem Dienstleister (der sich beispielsweise von einem Dienstleister, für den der Zusteller tätig ist, unterscheidet) an den Empfänger geliefert wird) bezeichnen. Die erste Information kann beispielsweise unmittelbar nach einem Erfassen (z.B. durch einen Sensor oder einen Prozessor), dass die Sendung die vorbestimmte Station erreicht oder verlassen hat, erzeugt und/oder erhalten werden. Das Erfassen kann beispielsweise Teil des Verfahrens gemäß dem zweiten Aspekt der Erfindung sein. Da es sich bei der vorbestimmten Station nicht um die letzte Station der Abfolge von Stationen handelt, bleibt bis zur Zustellung noch Zeit für die Person, im Rahmen des mittlerweile ausgelösten Prozesses, in dem der Person Gelegenheit zur Bezahlung der Ware gegeben wird, die Bezahlung der Ware vorzunehmen. Die vorbestimmte Station kann beispielsweise eine Sortierstation sein, an der die Sendung zusammen mit mehreren Sendungen anhand der Zustellungsadresse und ggf. der Eilbedürftigkeit sortiert wird.

In einer beispielhaften Ausführungsform aller Aspekte der Erfindung folgt aus der ersten Information, dass die Sendung die vorbestimmte Station erreicht oder verlassen hat, und die vorbestimmte Station ist eine Sortierstation, an der die Sendung während des Zustellprozesses zusammen mit anderen Sendungen sortiert wird. Die erste Information kann beispielsweise unmittelbar nach einem Erfassen (z.B. durch einen Sensor oder einen Prozessor), dass die Sendung die vorbestimmte Station erreicht oder verlassen hat, erzeugt und/oder erhalten werden. Das Erfassen der Daten kann beispielsweise ebenfalls Teil des Verfahrens gemäß dem zweiten Aspekt der Erfindung sein. Die Sendung wird an der Sortierstation beispielsweise zusammen mit den anderen Sendungen anhand der Zustellungsadresse und ggf. der Eilbedürftigkeit sortiert.

In den beiden vorangegangenen beispielhaften Ausführungsformen wird die erste Information beispielsweise in Reaktion auf ein Erfassen von Daten der Sendung erzeugt, wobei das Erfassen an der vorbestimmten Station automatisch erfolgt. Die Daten der Sendung umfassen beispielsweise eine Kennung der Sendung oder Information, die zur Identifizierung der Sendung und/oder eines Empfängers der Sendung und/oder von Zahlungsinformationen der Person genutzt werden kann. Die Daten der Sendung werden zumindest teilweise an der vorbestimmten Station erfasst, um die Sendungen verfolgen zu können. Erfindungsgemäß wird zumindest ein Teil der erfassten Daten genutzt, um den Prozess, in dem der Person Gelegenheit zur Bezahlung der Ware gegeben wird, auszulösen.

In einer beispielhaften Ausführungsform aller Aspekte der Erfindung folgt aus der ersten Information, dass die Sendung von der vorbestimmten Station entfernt werden soll, und die vorbestimmte Station umfasst einen verschlossenen Raum, in den die Sendung insbesondere zur Abholung durch einen Empfänger der Sendung verbracht wurde. Bei dem verschlossenen Raum handelt es sich beispielsweise um einen Aufbewahrungsraum (z.B. ein Aufbewahrungsfach), insbesondere einer Packstation, in die die Sendung zur Abholung durch den Empfänger zugestellt wurde.

Die erste Information kann dabei beispielsweise in Reaktion auf ein Erfassen eines vorbestimmten Schritts (z.B. eines Schritts, mit dem der Prozess gestartet wird, oder mit dem sich eine Person erfolgreich authentisiert hat) eines Prozesses, in dem sich eine Person Zugang zu dem verschlossenen Raum zur Entnahme der Sendung verschafft, erzeugt werden. Der vorbestimmte Schritt wird beispielsweise von einer mit dem verschlossenen Raum assoziierten Vorrichtung, insbesondere einer Vorrichtung, die den Zugang zu dem verschlossenen Raum kontrolliert, erfasst.

In einer beispielhaften Ausführungsform des ersten Aspekts der Erfindung umfasst das Verfahren ferner das Ausgeben von zweiter Information in Reaktion darauf, dass die Bezahlung der Ware als erfolgt angesehen wird, insbesondere an den Zusteller der Sendung oder ein Gerät des Zustellers der Sendung oder an den Empfänger der Sendung oder ein Gerät des Empfängers der Sendung. Beispielsweise erfolgt die Zustellung der Sendung (direkt an den Empfänger, oder in einen Aufbewahrungsraum, an eine Aufbewahrungsstelle oder an ein Lager) nur dann, wenn der Zusteller oder das Gerät des Zustellers zuvor die zweite Information erhalten hat.

Aus der zweiten Information folgt beispielsweise, dass die Bezahlung der Ware als erfolgt angesehen wird. Das Erhalten der zweiten Information durch den Zusteller oder dessen Gerät kann beispielsweise eine notwendige Voraussetzung dafür sein, dass der Zusteller die Sendung an den Empfänger übergibt. Alternativ kann beispielsweise das Erhalten der zweiten Information durch den Zusteller oder dessen Gerät und eine mit positivem Ergebnis verlaufende Prüfung der zweiten Information eine notwendige Voraussetzung dafür sein, dass der Zusteller die Sendung an den Empfänger übergibt. Bei der Prüfung kann beispielsweise geprüft werden, ob die zweite Information zu der Sendung passt und/oder die Bezahlung des korrekten Betrags widerspiegelt und/oder authentisch ist und/oder integer ist. Bei der Prüfung kann beispielsweise geprüft werden, ob die zweite Information mit dritter Information, die dem Zusteller oder dessen Gerät zumindest im Zeitpunkt der Prüfung zugänglich ist, übereinstimmt. Die zweite Information kann beispielsweise eine Kennung der Sendung umfassen oder unter Verwendung zumindest eines Teils der Kennung erzeugt worden sein. Zusätzlich oder alternativ kann die zweite Information beispielsweise eine Information über die Höhe eines für die Ware bezahlten Betrags umfassen oder unter Verwendung zumindest eines Teils dieser Information erzeugt worden sein.

Die zweite Information wird beispielsweise an den Empfänger der Sendung oder ein Gerät des Empfängers der Sendung ausgegeben, wobei die zweite Information oder eine daraus abgeleitete Information beispielsweise zum Nachweis der als erfolgt angesehenen Bezahlung der Ware gegenüber dem Zusteller oder einem Gerät des Zustellers dient.

Bei Zustellung der Sendung direkt an den Empfänger kann die zweite Information dann beispielsweise im Zeitpunkt der Zustellung durch den Empfänger dem Zusteller mitgeteilt oder durch das Gerät des Empfängers an das Gerät des Zustellers übermittelt werden.

In einer beispielhaften Ausführungsform aller Aspekte der Erfindung umfasst der Prozess, in welchem der Person Gelegenheit gegeben wird, die Ware zu bezahlen, zumindest folgendes:
- Ausgeben einer Anfrage, ob eine Person, die insbesondere der Empfänger der Sendung und/oder der Käufer der Ware ist, die Ware bezahlen möchte, an die Person;
- falls aus einer Reaktion der Person auf die Anfrage folgt, dass die Person die Ware bezahlen möchte, Durchführen der Bezahlung der Ware für die Person oder Unterstützen der Person bei der Bezahlung der Ware.

Eine Kommunikationsadresse zum Ausgeben der Anfrage an die Person wird beispielsweise zumindest basierend auf Information aus der erhaltenen ersten Information ermittelt. Beispielsweise wird basierend auf Information aus der ersten Information die Person ermittelt und dann für diese Person die zum Ausgeben der Anfrage erforderliche Kommunikationsadresse aus einer Datenbank ermittelt.

Das Durchführen der Bezahlung der Ware für die Person kann beispielsweise zumindest basierend auf gespeicherten Zahlungsinformationen der Person erfolgen, beispielsweise Kreditkarteninformation oder Bankverbindungsinformationen.

Das Unterstützen der Person bei der Bezahlung der Ware kann beispielsweise durch eine Softwareanwendung (beispielsweise einer App) auf einem Gerät der Person oder mittels einer insbesondere interaktiven Webseite erfolgen.

Die Bezahlung der Ware kann beispielsweise auf eine der folgenden Arten durchgeführt werden:
- Bezahlung basierend auf Kreditkarteninformationen;
- Bezahlung per Lastschrift;
- Bezahlung per Überweisung;
- Bezahlung per Geldkarte;
- Bezahlung über einen Bezahlsystem-Anbieter, bei dem die Person ein Konto besitzt;
- Bezahlung per PrePaid-Kreditkarte oder PrePaid-Code; oder
- Bezahlung per Mobiltelefon-Rechnung.

In einer beispielhaften Ausführungsform aller Aspekte der Erfindung erfolgt die Bezahlung der Ware an eine zweite Entität, die gegenüber einer ersten Entität, die der Verkäufer der Ware und/oder der Versender der Sendung ist, verschieden und insbesondere als Inkasso-Dienstleister tätig ist. Alternativ erfolgt die Bezahlung der Ware an die erste Entität.

Die zweite Entität ist beispielsweise Teil eines Unternehmen, das zumindest einen Teil des Zustellungsprozesses ausführt oder mit einem derartigen Unternehmen wirtschaftlich assoziiert ist.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1:: eine schematische Darstellung einer beispielhaften Ausführungsform eines Systems gemäß der vorliegenden Erfindung,
- Fig. 2:: eine schematische Darstellung einer beispielhaften Ausführungsform einer Vorrichtung gemäß dem ersten oder zweiten Aspekts der vorliegenden Erfindung,
- Fig. 3:: ein Flussdiagramm einer beispielhaften Ausführungsform eines Verfahrens gemäß dem ersten Aspekt der vorliegenden Erfindung;
- Fig. 4:: ein Flussdiagramm einer beispielhaften Ausführungsform eines Verfahrens gemäß dem zweiten Aspekt der vorliegenden Erfindung; und

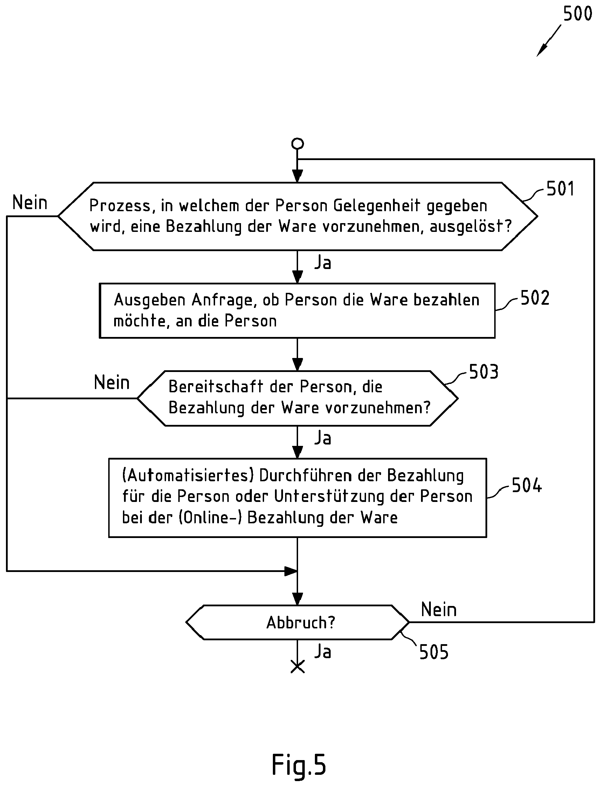

- Fig. 5:: ein Flussdiagramm einer beispielhaften Ausführungsform des Schritts 302 des Flussdiagramms 300 der Fig. 3 gemäß der vorliegenden Erfindung.

### Detaillierte Beschreibung einiger beispielhafter Ausführungsformen der Erfindung

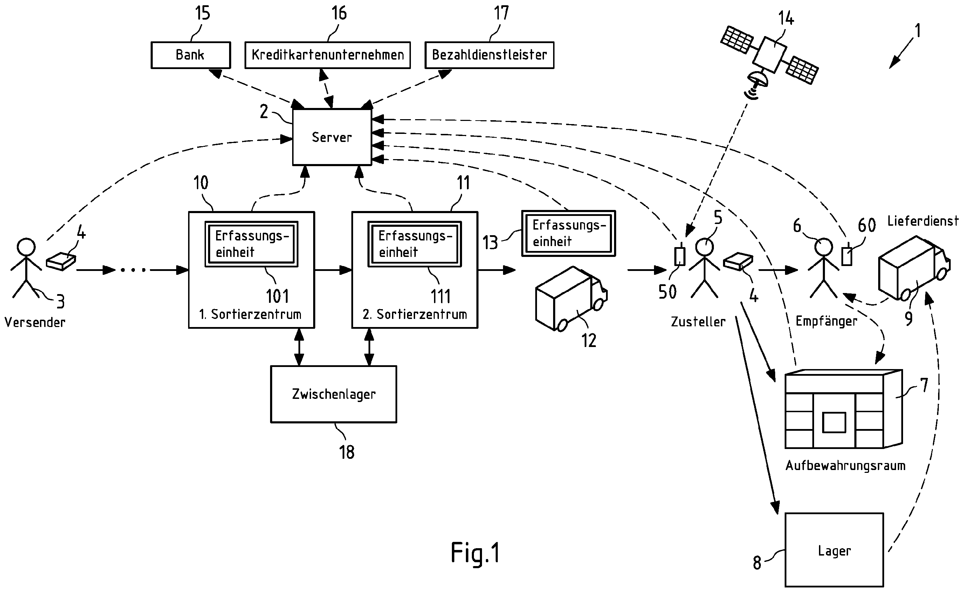

Fig. 1 ist eine schematische Darstellung einer beispielhaften Ausführungsform eines Systems 1 gemäß der vorliegenden Erfindung.

Das System 1 zeigt mit durchgezogenen Pfeilen den Weg einer Sendung 4 entlang verschiedener Stationen der Zustellkette, und zeigt mit gestrichelten Pfeilen den Informationsfluss zwischen den Komponenten des Systems 1. Der Informationsfluss ist dabei insbesondere logisch zu verstehen, kann also über physikalische Zwischenelemente wie beispielsweise Relais oder Router erfolgen, insbesondere bei zumindest abschnittsweise drahtlosen Verbindungen.

Eine Sendung 4, bei der es sich beispielsweise um einen Brief (insbesondere einen Brief mit darin enthaltener Ware, z.B. einem Buch), ein Päckchen oder ein Paket handeln kann, wird von einem Versender 3, der beispielsweise auch der Verkäufer einer in der Sendung 4 enthaltenen Ware ist, aber nicht zwingend sein muss, zum Versand an ein Zustellungsunternehmen übergeben. Das Zustellungsunternehmen unterhält für derartige Versandaufgaben u.a. das erste Sortierzentrum 10, das zweite Sortierzentrum 11, das Zwischenlager 18, Zustellfahrzeuge 12, Zusteller 5 und ggf. Aufbewahrungsräume 7 (z.B. in Form einer Packstation) oder Aufbewahrungsstellen (z.B. einen Paketshop, nicht dargestellt). Auch der Server 2 ist dem Zustellungsunternehmen zugeordnet.

Wie die Sendung 4 vom Versender 3 konkret aufgegeben wird, ist in Fig. 1 nicht detailliert dargestellt. Beispielsweise gibt der Versender 3 die Sendung 4 bei einer Filiale des Zustellungsunternehmens auf, von der diese dann an das erste Sortierzentrum 10 weitergeleitet wird. Allerdings kann der Versender 3 die Sendung 4, beispielsweise bei großen Anzahlen von täglich anfallenden Sendungen 4, wie es bei Online-Händlern der Fall ist, auch direkt an das erste Sortierzentrum 10 liefern.

Im ersten Sortierzentrum 10, bei dem es sich beispielsweise um eines von vielen ersten Sortierzentren handeln kann, beispielsweise einem Frachtzentrum der Deutschen Post AG, wird die Sendung 4 zusammen mit anderen Sendungen insbesondere anhand der auf der Sendung 4 vorhandenen Zustellungsadresse sortiert. Sendungen, die in der gleichen Region zugestellt werden müssen, werden dann an ein entsprechendes von vielen zweiten Sortierzentren 11 transportiert. Zweite Sortierzentren 11 entsprechen beispielsweise den Zustellbasen der Deutschen Post AG. Am zweiten Sortierzentrum 11 werden die Sendungen auf verschiedene Zusteller 5 verteilt und entsprechend in die jeweiligen Fahrzeuge 12 der Zusteller eingeladen. Jeder Zusteller 5 stellt dann die ihm zugeordneten Sendungen 4 an die auf der Sendung vorhandene Zustellungsadresse zu. Die Zustellungsadresse kann beispielsweise eine Adresse des Empfängers 6 bezeichnen, und dann direkt an den Empfänger 6 zugestellt werden. Alternativ kann die Zustelladresse auch die Adresse eines Aufbewahrungsraums (z.B. einer Packstation) bezeichnen, in die die Sendung 4 zugestellt wird und dann vom Empfänger 6 (oder einer anderen Person, die über die entsprechende Autorisierung verfügt) abgeholt werden kann. Alternativ kann die Zustelladresse auch die Adresse einer Aufbewahrungsstelle (z.B. eines Paketshops, einer Einzelhandelsfiliale, einer Tankstelle, eines Restaurants, etc.) bezeichnen, an die die Sendung 4 zugestellt wird und dann vom Empfänger 6 (oder einer anderen Person, die über die entsprechende Autorisierung verfügt) dort abgeholt werden kann. Die Zustellungsadresse kann weiter alternativ auch die Adresse eines Lagers bezeichnen, in das ein Empfänger 6 eine oder mehrere Sendungen 4 zustellen lassen kann. Der Empfänger 6 kann dann mit einem Lieferdienst 9, der beispielsweise auch das Lager 8 unterhält, einen Wunschtermin für die Lieferung der Sendungen 4 aus dem Lager 8 an den Empfänger 6 vereinbaren, beispielsweise auch abends oder am Wochenende.

Gemäß beispielhaften Ausführungsformen der vorliegenden Erfindung wird die Sendung 4 vom Versender 3 als sog. Nachnahme-Sendung aufgegeben. Eine in der Sendung 4 enthaltene Ware, beispielsweise eine bei einem Online-Händler 3 durch eine Person, beispielsweise den Empfänger 6, bestellte Ware, ist also im Zeitpunkt der Aufgabe der Sendung 4 zum Versand noch nicht bezahlt worden. Diese Bezahlung der Ware erfolgt in beispielhaften Ausführungsformen der Erfindung durch eine Person, die beispielsweise der Käufer der Ware und/oder der Empfänger 6 der Sendung 4 ist, im Zeitpunkt der Zustellung der Sendung 4 oder bevorzugt davor. Insbesondere erfolgt die Bezahlung nicht dadurch, dass der Zusteller 5 den Betrag vom Empfänger 6 in bar kassiert, sondern durch elektronische Abwicklung der Bezahlung, insbesondere zwischen dem Empfänger 6 oder einer anderen Person und dem Server 2. Der Versender 3 informiert den Server 2 bei Aufgabe der Sendung 4 darüber, dass die Sendung eine Nachnahme-Sendung ist, beispielsweise über eine dazu vom Server 2 bereitgestellte Webseite oder eine anderweitige Kommunikationsschnittstelle (beispielsweise über eine Anwendungsprogrammierungsschnittstelle (Application Programming Interface, API)). Bereits ab diesem Zeitpunkt kann der Sendung eine Kennung zugeordnet sein, mittels der die Sendung 4 (insbesondere eindeutig) identifizierbar ist. Im Server kann zu der Kennung dann beispielsweise in einer Datenbank abgespeichert werden, dass es sich bei der zugehörigen Sendung 4 um eine Nachnahme-Sendung handelt.

In beispielhaften Ausführungsformen der Erfindung löst der Server 2 einen Prozess aus, in dem einer Person Gelegenheit zur Bezahlung der Ware gegeben wird. In diesem Prozess kann eine Interaktion zwischen dem Server 2 und weiteren Servern einer Bank 15, eines Kreditkartenunternehmens 16 oder eines Bezahldienstleisters 17 stattfinden. Dieser Prozess erlaubt bereits eine deutliche Beschleunigung der Bezahlung gegenüber dem durch den Zusteller 5 durchgeführten Kassieren eines Barbetrags. Darüber hinaus wird dieser Prozess aber automatisch in Reaktion auf erste Information ausgelöst, aus der folgt, dass eine relative Positionsänderung der Sendung zu einer vorbestimmten Station erfolgt ist oder bevorsteht.

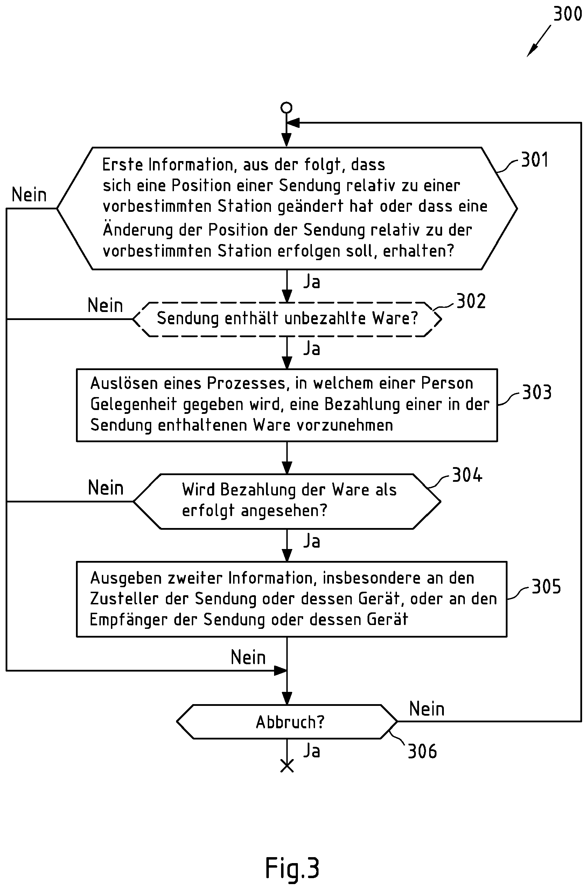

Der Server 2 (oder ein Prozessor des Servers) führt dazu beispielsweise das Verfahren 300 der Fig. 3 aus. In einem ersten Schritt 301 wird dabei geprüft, ob erste Information, aus der folgt, dass sich eine Position einer Sendung 4 relativ zu einer vorbestimmten Station geändert hat oder dass eine Änderung der Position der Sendung 4 relativ zu der vorbestimmten Station erfolgen soll, erhalten wurde.

Wenn dies nicht der Fall ist, springt das Verfahren zum Schritt 306. Anderenfalls wird im Schritt 303 ein Prozess ausgelöst, in dem einer Person Gelegenheit gegeben wird, eine Bezahlung der Ware vorzunehmen. Der zwischen Schritt 301 und Schritt 303 angesiedelte Schritt 302 ist optional und wird später noch erläutert.

Im Schritt 304 wird dann geprüft, ob die Bezahlung der Ware als erfolgt angesehen wird. Die Bezahlung der Ware wird beispielsweise als erfolgt angesehen, wenn ein Bezahlungsvorgang ohne Fehlermeldung abgeschlossen wurde und/oder eine Bestätigung über die erfolgte Zahlung erhalten wurde, beispielsweise von einem Server einer Bank 15, eines Kreditkartenunternehmens 16 oder eines Bezahldienstleisters 17.

Wenn dies nicht der Fall ist, springt das Verfahren zu Schritt 306. Anderenfalls wird im Schritt 305 zweite Information ausgegeben, insbesondere an den Zusteller 5 der Sendung 4 oder dessen Gerät 50, oder an den Empfänger 6 der Sendung 4 oder dessen Gerät 60. Aus der zweiten Information folgt beispielsweise, dass die Bezahlung der Ware als erfolgt angesehen wird. Das unmittelbare (z.B. vom Server 2) oder mittelbare Erhalten (z.B. vom Empfänger 6 oder dessen Gerät) der zweiten Information durch den Zusteller 5 oder dessen Gerät 50 und ggf. eine mit positivem Ergebnis verlaufende Prüfung der zweiten Information, kann beispielsweise eine notwendige Voraussetzung dafür sein, dass der Zusteller 5 die Sendung 4 an den Empfänger 6 übergibt. Bei der Prüfung kann beispielsweise geprüft werden, ob die zweite Information zu der Sendung 4 passt und/oder die Bezahlung des korrekten Betrags widerspiegelt und/oder authentisch ist (beispielsweise also von einer vertrauenswürdigen Quelle, insbesondere dem Server 2, stammt) und/oder integer ist (beispielsweise also nicht manipuliert wurde).

Im Schritt 306 wird geprüft, ob das Verfahren 300 abgebrochen werden soll. Wenn dies der Fall ist, erfolgt der Abbruch. Anderenfalls springt das Verfahren zum Schritt 301 zurück.

Die zweite Information kann beispielsweise lediglich zum Ausdruck bringen, dass die Ware der Sendung 4, mit der die zweite Information explizit oder implizit assoziiert ist, bezahlt wurde. Dies kann beispielsweise ausreichen, wenn die zweite Information vom Server 2 an das Gerät 50 der Zustellers 5 übertragen wird und entweder bereits am Server 2 oder am Gerät 50 mit der Sendung 4 assoziiert wurde. Beispielsweise wird die zweite Information am Server 2 erzeugt und dann zusammen mit einer Kennung der Sendung 4, auf die sich die zweite Information bezieht, an das Gerät 50 übertragen. Wenn der Zusteller 5 dann beispielsweise einen Datensatz zu der Sendung 4 aufruft und/oder Daten der Sendung 4 erfasst (beispielsweise im Zeitpunkt der Zustellung), kann ihm die zweite Information angezeigt werden, so dass er informiert ist, dass die Ware der Sendung 4 bezahlt wurde. Der Zusteller 5 kann sich dann beispielsweise darauf verlassen, dass die Ware in voller Höhe bezahlt wurde, da der zu bezahlende Betrag beispielsweise in dem ausgelösten Prozess des Schritts 303 vorgegeben wurde. Die Authentizität und/oder Integrität der zweiten Information kann beispielsweise aufgrund des Kommunikationskanals und/oder -protokolls (z.B. verschlüsselte Kommunikation vom Server 2), mittels dem die zweite Information empfangen wird, gewährleistet sein oder zumindest als mit hoher Wahrscheinlichkeit gewährleistet angesehen werden. Alternativ kann die zweite Information vom Server 2 kryptographisch signiert sein (beispielsweise in üblicher Form durch Bildung eines Hashwerts über die zweite Information, Verschlüsselung des Hashwerts insbesondere mit einem privaten, nur dem Server 2 bekannten Schlüssel und Anhängen des Hashwerts an die zweite Information), so dass die Authentizität und Integrität am Gerät 50 geprüft werden kann (durch erneute Berechnung des Hashwerts, Entschlüsselung des empfangenen verschlüsselten Hashwerts mit einem zum privaten Schlüssel korrespondierenden öffentlichen Schlüssel und Vergleich des erneut berechneten Hashwerts mit dem entschlüsselten Hashwerts, wobei Übereinstimmung beider Wert Integrität und Authentizität beweist).

Bei dieser Variante der Verwendung der zweiten Information ist allerdings zwingend erforderlich, dass der Server 2 die zweite Information an das Gerät 50 des Zustellers 5 übertragen kann, was insbesondere in Gebieten mit mangelhafter Funkabdeckung nicht gewährleistet sein und damit die Zustellung gefährden kann.

Die zweite Information kann alternativ beispielsweise nach einem vorgeschriebenen Verfahren erzeugt werden (beispielsweise beruhend auf einer Kennung der Sendung 4 und/oder der Höhe des gezahlten Betrags und/oder weiteren Informationen), beispielsweise durch den Server 2, und kann beispielsweise ausgegeben werden, wenn die Ware vollständig bezahlt wurde (anderenfalls erfolgt beispielsweise keine Ausgabe der zweiten Information). Das Verfahren kann beispielsweise geheim sein, und/oder geheime Information verwenden, beispielsweise einen geheimen Schlüssel. Das Verfahren oder die Schlüssel können beispielsweise in Abständen geändert werden. Beispielsweise kann die zweite Information nach erfolgter Bezahlung der Person mitgeteilt oder auf ein Gerät der Person übermittelt werden (beispielsweise mittels einer verschlüsselten Verbindung). Die Person kann dann die zweite Information, insbesondere im Zeitpunkt der Zustellung, dem Zusteller 5 präsentieren oder mitteilen (oder das Gerät der Person kann die zweite Information an das Gerät 50 des Zustellers 5 übertragen, z.B. drahtlos), Der Zusteller 5 (oder dessen Gerät 50) kann die präsentierte oder mitgeteilte Information (oder die übertragene Information) dann beispielsweise mit dritter Information abgleichen, die dem Zusteller 5 (oder dem Gerät 50) vorliegt. Diese dritte Information kann beispielsweise mit der Sendung assoziiert sein, beispielsweise codiert (aber insbesondere mit einem Gerät 50 des Zustellers 5 erfassbar und decodierbar) oder uncodiert. Beispielsweise ist die dritte Information in einem Barcode enthalten, die auf der Sendung 4 oder einem Etikett der Sendung 4 aufgedruckt ist, und/oder uncodiert auf der Sendung 4 oder einem Etikett der Sendung 4 aufgedruckt. Beispielsweise kann der Zusteller 5 (oder dessen Gerät 50) bei Übereinstimmung der dritten Information mit der zweiten Information davon ausgehen, dass die Ware der Sendung 4 vollständig bezahlt wurde und die Sendung 4 daher an die Person, die die zweite Information präsentiert oder mitteilt (oder deren Gerät die zweite Information übermittelt), übergeben werden kann. Da die zweite Information nach einem vorgeschriebenen Verfahren erzeugt wird, kann entsprechend auch die dritte Information nach dem gleichen vorgeschriebenen Verfahren erzeugt werden (beispielsweise beruhend auf einer Kennung der Sendung 4 und/oder der Höhe des zu zahlenden Betrags und/oder weiteren Informationen), beispielsweise durch den Server 2. Die dritte Information kann beispielsweise mit der Sendung 4 assoziiert werden, beispielsweise also auf die Sendung 4 codiert oder uncodiert aufgedruckt oder in einen mit der Sendung 4 assoziierten Speicher (der beispielsweise an der Sendung 4 befestigt ist) eingespeichert werden, wenn der Prozess, in dem der Person Gelegenheit zur Bezahlung der Ware gegeben wird, ausgelöst wird (siehe Schritt 303 der Fig. 3).

Bei dieser Variante der Verwendung der zweiten Information ist allerdings nachteilig, dass das Assoziieren (z.B. Aufdrucken oder Einschreiben in einen Speicher) der dritten Information mit der Sendung 4 die Verarbeitung der Sendung 4 während des Zustellungsprozesses verzögern und generell umständlich sein kann.

Es kann daher alternativ vorgesehen sein, dass die dritte Information beispielsweise vor oder bei Antritt der Zustellungsroute des Zustellers 5 auf dessen Gerät 50 gespeichert wird, so dass sie im Zeitpunkt der Zustellung einer Sendung 5 auf dem Gerät 50 abgerufen werden und mit präsentierter oder mitgeteilter zweiter Information verglichen werden kann. Zu diesem Zweck ist die dritte Information beispielsweise mit der Kennung der Sendung 4 assoziiert (beispielsweise als Paar gespeichert) Beispielsweise erhält der Zusteller 5 also vor oder bei Antritt der (beispielsweise täglichen) Zustellungsroute für alle Sendungen 4, die nicht bezahlte Waren enthalten, jeweilige dritte Information mit jeweils zugehöriger Kennung der Sendung auf das Gerät 50 gespeichert.

In einer weiteren Variante kann die zweite Information so erzeugt werden, dass sie bei Präsentation durch ein Gerät einer Person, dem die zweite Information übermittelt oder mitgeteilt wurde, insbesondere durch den Server 2, vom Gerät 50 des Zustellers 5 geprüft werden kann. Beispielsweise kann die zweite Information zumindest eine Kennung der Sendung 4 und eine Information über die Höhe des gezahlten Betrags enthalten sowie eine Signatur über zumindest die Kennung der Sendung 4 und die Information über die Höhe des gezahlten Betrags. Die Signatur kann erzeugt werden wie oben bereits beschrieben wurde, also insbesondere basierend auf einem geheimen Schlüssel, der nur dem Server 2 bekannt ist. Das Gerät 50 verfügt beispielsweise über den zum privaten Schlüssel korrespondierenden Schlüssel und kann anhand der Signatur prüfen, ob die zweite Information authentisch und integer ist. Wenn dies der Fall ist, kann anhand der in der zweiten Information enthaltenen Kennung der Sendung 4 und der Information über die Höhe des gezahlten Betrags geprüft werden, ob diese Werte zu der gegenwärtig zuzustellenden Sendung korrespondieren, also insbesondere ob die Höhe des gezahlten Betrags zu der laut den Informationen des Geräts 50 für die Sendung 4 erforderlichen Höhe der Zahlung entspricht. Diese Informationen des Geräts können in einem sendungsspezifischen Datensatz des Geräts 50 enthalten sein, der beispielsweise vor oder bei Antritt der (insbesondere täglichen) Zustellungsroute des Zustellers 5 auf dessen Gerät 50 übertragen wird (insbesondere zusammen mit Datensätzen weiterer Sendungen) und beispielsweise beim Erfassen von Daten der Sendung 4 mit dem Gerät 50 (z.B. durch Scannen eines Barcodes der Sendung 4 mit dem Gerät 50) im Zeitpunkt der Zustellung der Sendung 4 auf dem Gerät 50 aufgerufen wird (insbesondere identifiziert anhand einer Kennung der Sendung 4, die in den erfassten Daten enthalten ist). Alternativ kann die Information über die Höhe des gezahlten Betrags nicht in der zweiten Information enthalten sein und die Signatur entsprechend auch nicht über diese Information über die Höhe des gezahlten Betrags gebildet werden. Dies kann beispielsweise dann sinnvoll sein, wenn die zweite Information ausschließlich dann ausgegeben wird, wenn die Ware als vollständig bezahlt angesehen wird. Die zweite Information enthält dann also beispielsweise zumindest die Kennung der Sendung 4 und die Signatur über zumindest die Kennung der Sendung 4.

Der private Schlüssel und der korrespondierende öffentliche Schlüssel (der beispielsweise auf einer Vielzahl von Geräten 50 von Zustellern 5 gespeichert sein kann) kann beispielsweise in Abständen, beispielsweise täglich, geändert werden.

Die zweite Information kann, je nach ihrer Ausprägung, dem Gerät 50 oder dem Zusteller 5 durch die Person oder deren Gerät, die/das die zweite Information erhalten hat, auf unterschiedlichen Wegen präsentiert/mitgeteilt oder übermittelt werden:
Die zweite Information kann dem Zusteller 5 beispielsweise mündlich durch die Person (insbesondere den Empfänger 6) mitgeteilt, auf einer Anzeigeeinheit eines Geräts der Person (insbesondere dem Gerät 60 des Empfängers 6) vorgezeigt oder von einem Gerät der Person (insbesondere dem Gerät 60 des Empfängers 6) an das Gerät 50 des Zustellers übertragen werden, insbesondere durch drahtlose Kommunikation, beispielsweise mittels Bluetooth oder NFC. Dies kann vorteilhaft im Zeitpunkt der Zustellung der Sendung erfolgen. Die zweite Information kann dem Gerät 50 des Zustellers auch dadurch mitgeteilt werden, dass das Gerät der Person die zweite Information an eine Vorrichtung überträgt, die die zweite Information oder eine daraus abgeleitete Information, beispielsweise eine Freigabe für die Sendung 4 zur Übergabe, dann an das Gerät 50 des Zustellers 5 überträgt.

Die zweite Information kann durch die Person alternativ auch dergestalt an der Zustellungsadresse zur Erfassung bereitgestellt werden, dass sie auch bei Abwesenheit der Person (und ggf. anderer Empfänger 6) vom Zusteller 5 oder dessen Gerät 50 erfasst und ausgewertet werden kann. Die zweite Information kann beispielsweise dergestalt auf einem Etikett aufgedruckt sein oder durch eine elektronische Anzeigeeinheit dargestellt werden, dass sie für den Zusteller 5 selbst optisch erfassbar und insbesondere auswertbar ist. Das Etikett oder die elektronische Anzeigeeinheit kann die zweite Information auch in durch das Gerät 50 des Zustellers 5 optisch erfassbarer Form, beispielsweise als Barcode, wiedergeben. Das Etikett oder die Anzeigeeinheit kann beispielsweise an oder in der Nähe eines Aufnahmeraums für die Sendung 4, beispielsweise einem der Person zugeordneten Paketkasten, angeordnet sein, in welchen der Zusteller die Sendung 4 dann zustellen kann, wenn die Prüfung der zweiten Information positiv verläuft.

Alternativ kann die zweite Information durch die Person in elektronisch übertragbarer Form bereitgestellt werden, beispielsweise zur Erfassung mittels des Geräts 50 des Zustellers 5. Dazu hat die Person die zweite Information beispielsweise in einen Speicher eingespeichert (beispielsweise über eine drahtlose oder drahtgebundene Schnittstelle), auf den über Funk zugegriffen werden kann (beispielsweise allerdings erst nach erfolgreicher Authentisierung) oder der seine Information über Funk aussendet. Der Speicher kann beispielsweise nach erfolgreicher Authentisierung des Geräts 50 des Zustellers gegenüber einer Vorrichtung (beispielsweise einem Modul zur Hausautomatisierung, wie beispielsweise einem SmartHome-Modul, oder einer Zugangskontrolleinheit eines Paketkastens, die den Zugang zu dem Paketkasten kontrolliert), die den Speicher umfasst, ausgelesen werden. Alternativ kann der Speicher Teil einer Funkbake sein, die den Inhalt des Speichers zumindest zeitweise aussendet. Sowohl die Vorrichtung als auch die Funkbake können an oder in der Nähe eines Aufnahmeraums für die Sendung 4, beispielsweise einem der Person zugeordneten Paketkasten, angeordnet sein, in welchen der Zusteller 5 die Sendung 4 dann zustellen kann, wenn die Prüfung der zweiten Information positiv verläuft.

Als weitere Variante kann vorgesehen sein, dass der Zusteller 5, wenn er den Empfänger 6 im Zeitpunkt der Zustellung nicht antrifft, aber grundsätzlich Möglichkeiten der Zustellung der Sendung 4 hätte (z.B. in einen Paketkasten oder an einen Nachbarn), falls die zweite Information vorläge, Kontakt zu der Person oder deren Gerät aufnimmt, die/das die zweite Information erhalten hat, um die zweite Information abzufragen. Die zur Kontaktaufnahme erforderliche Kommunikationsadresse der Person oder des Geräts der Person (z.B. eine (Mobil-) Telefonnummer, eine E-Mail-Adresse oder eine Instant-Messaging-Adresse, um nur ein paar Beispiele zu nennen) kann im Gerät 50 des Zustellers 5 in einem Datensatz zu der Sendung 4 hinterlegt sein oder in einer Vorrichtung enthalten sein, die nach erfolgreicher Authentisierung des Zustellers 5 oder des Geräts 50 des Zustellers 5 gegenüber der Vorrichtung basierend auf der Kommunikationsadresse eine Kommunikation (beispielsweise ein Telefonat, oder ein Video-Telefonat, oder eine Instant-Messaging-Sitzung) zwischen dem Zusteller 5 und der Person aufbaut, in der die Person dem Zusteller 5 die zweite Information mitteilen kann.

Bei der Beschreibung des Verfahrens 300 wurde beispielhaft davon ausgegangen, dass es sich bei allen Sendungen 4 im System 1 der Fig. 1 um Sendungen handelt, die eine noch nicht bezahlte Ware enthalten, oder dass am Server 2 nur erste Information von Sendungen 4 erhalten wird, die jeweils unbezahlte Waren enthalten. Wenn dies nicht der Fall ist und im System 1 der Fig. 1 auch Sendungen zugestellt werden, die bereits bezahlte Waren enthalten, kann im Verfahren 300 eine Unterscheidung hilfreich sein, ob es sich um Sendungen mit unbezahlten Waren oder um Sendungen mit bezahlten Waren handelt. Beispielsweise kann im Anschluss an den Schritt 301 ein Schritt 302(gestrichelt dargestellt) ausgeführt werden, in dem geprüft wird, ob es sich bei der Sendung, für die im Schritt 300 erste Information erhalten wurde, um eine Sendung handelt, die eine unbezahlte Ware enthält. Wenn dies der Fall ist, wird der Schritt 303 ausgeführt. Anderenfalls wird zum Schritt 306 gesprungen. Die Prüfung im Schritt 302 kann beispielsweise auf Information beruhen, die in der ersten Information enthalten ist (beispielsweise zusätzlich zu einer Kennung der Sendung) und explizit angibt, ob die Sendung eine unbezahlte Ware enthält oder nicht. Alternativ kann die Prüfung im Schritt 302 auf einer in der ersten Information enthaltenen Kennung der Sendung und einer Datenbank beruhen, die für jede Kennung angibt, ob es sich bei der jeweiligen Sendung um eine Sendung mit einer unbezahlten Ware handelt oder nicht.

Es sei hervorgehoben dass, falls im Schritt 301 erste Information zu einer Sendung mit unbezahlter Ware erhalten wird, das Auslösen des Prozesses gemäß Schritt 303 als in Reaktion auf das Erhalten dieser ersten Information erfolgend angesehen wird, auch wenn zusätzlich noch der optionale Zwischenschritt 302 ausgeführt wird.

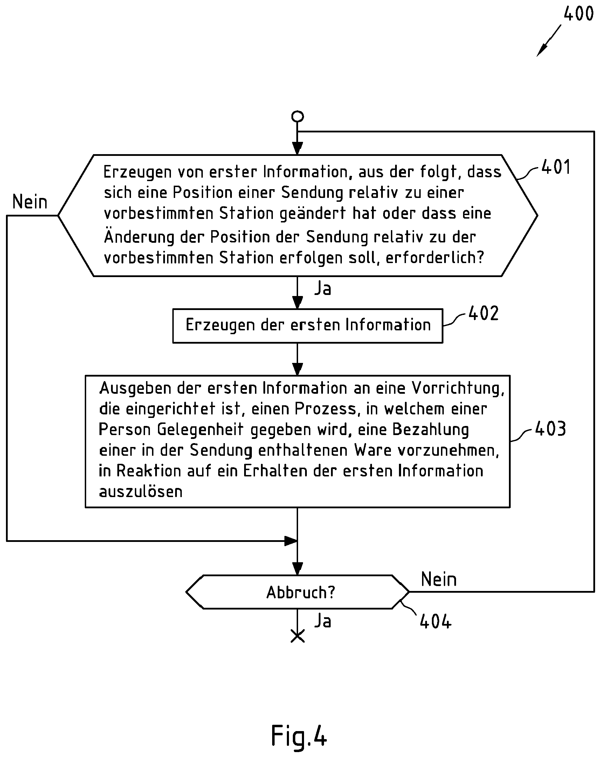

Der Schritt 302 kann wie bereits angedeutet allerdings entbehrlich sein, wenn am Server 2 ausschließlich erste Information betreffend solche Sendungen 4 erhalten wird, die eine unbezahlte Ware enthalten. Dies kann durch die Vorrichtungen, die die erste Information erzeugen, gesteuert werden, wie nachfolgend zu Fig. 4 erläutert wird.

Die vorbestimmte Station ist eine Station aus einer Abfolge von Stationen, an die die Sendung 4 während des Zustellungsprozesses der Sendung 4 jeweils gelangt. Im beispielhaften System 1 der Fig. 1 umfasst diese Abfolge von Stationen beispielsweise die erste Sortierstation 10, die zweite Sortierstation 11, eine Station, an der die Zustellungsfahrzeuge 12 beladen werden, und eine letzte Station, an der die Zustellung der Sendung 4 erfolgt, also beispielsweise direkt beim Empfänger 6, an dem Aufbewahrungsraum 7, an einer Aufbewahrungsstelle oder dem Lager 8. An diesen Stationen sind beispielsweise Erfassungseinheiten 101, 111 oder 13 (die beispielsweise der Erfassung von Daten von Sendungen, die in die Fahrzeuge 12 eingeladen werden, dient) installiert und/oder im Einsatz, die Daten der Sendung 4 erfassen, wobei das Erzeugen der ersten Information in Reaktion auf das Erfassen der Daten der Sendung 4 erfolgt und die erste Information beispielsweise zumindest einen Teil der erfassten Daten umfasst oder daraus abgeleitet ist. Es ist aber auch möglich, dass an oder vor einer Station, insbesondere der letzten Station, an der die Zustellung der Sendung 4 erfolgt, ein Gerät 50 des Zustellers 5 eingesetzt wird, um die erste Information zu erzeugen, beispielsweise ausgelöst durch ein durch das Gerät 50 durchgeführtes Bestimmen, dass der Abstand zwischen dem Gerät 50 und der vorbestimmten Station einen vorbestimmten Wert unterschritten hat, oder durch ein mit dem Gerät 50 durchgeführten Erfassen von Daten der Sendung 4.

Das von den Erfassungseinheiten 101,111 und 13, dem Gerät 50 des Zustellers 5 oder einer Kontrolleinheit des Aufbewahrungsraums 7 dazu ausgeführte Verfahren 400 ist in Fig. 4 dargestellt.

In einem Schritt 401 wird geprüft, ob das Erzeugen von erster Information, aus der folgt, dass sich eine Position einer Sendung 4 relativ zu einer vorbestimmten Station geändert hat oder dass eine Änderung der Position der Sendung relativ zu der vorbestimmten Station erfolgen soll, erforderlich ist. Das Erzeugen kann beispielsweise erforderlich sein, wenn Daten einer Sendung 4 erfasst wurden, oder wenn ein anderweitiges Ereignis eingetreten ist, dass das Erzeugen der ersten Information erforderlich macht.

Wenn die Prüfung im Schritt 401 positiv verläuft, wird im Schritt 402 die erste Information erzeugt und im Schritt 402 an eine Vorrichtung (insbesondere den Server 2) ausgegeben, die eingerichtet ist, einen Prozess, in dem einer Person Gelegenheit gegeben wird, eine Bezahlung der Ware vorzunehmen, in Reaktion auf ein Erhalten der ersten Information auszulösen.

Anschließend, und auch in dem Fall, dass die Prüfung im Schritt 401 negativ verlaufen ist, wird der Schritt 404 ausgeführt und geprüft, ob das Verfahren 400 abgebrochen werden soll. Wenn dies der Fall ist, erfolgt der Abbruch. Anderenfalls springt das Verfahren 400 zurück zu Schritt 401.

Die Erfassungseinheiten 101, 111 und 13 sowie das Gerät 50 des Zustellers 5 können den Schritt 402, also das Erzeugen der ersten Information, beispielsweise in Reaktion auf das Erfassen von Daten einer Sendung 4 vornehmen. Das Erhalten solcher erster Information spiegelt aus Sicht des Servers 2 wider, dass die Sendung 4 die jeweilige mit der Erfassungseinheit 101, 111 oder 13 assoziierte Station gerade erreicht hat (oder gerade verlassen hat) und daher deren Daten erfasst wurden, bzw. dass die Sendung 4 gerade die letzte Station, an der die Zustellung erfolgt (siehe die Bezugszeichen 6, 7 und 8 in Fig.1), erreicht hat und daher der Zusteller 5 mit dem Gerät 50 die Daten der Sendung 4 erfasst hat. Das Erreichen einer Station bedeutet aus Sicht des Servers 2 eine Änderung der Position der Sendung 4 relativ zu der Station, unabhängig davon, ob die vorige Position der Sendung 4 konkret bekannt war oder nicht, da die Sendung 4 vorher offensichtlich die Station noch nicht erreicht hatte.

Die Daten der Sendung 4 sind beispielsweise codiert oder uncodiert mit der Sendung 4 assoziiert, beispielsweise aufgedruckt (z.B. als Barcode) oder elektronisch in einem mit der Sendung 4 assoziierten Speicherelement gespeichert. Die Daten der Sendung werden beispielsweise optisch (insbesondere durch einen Scanner oder Barcode-Leser) oder per Funkübertragung (z.B. durch einen RFID- oder NFC-Lesegerät) erfasst.

Die Daten der Sendung 4 umfassen beispielsweise eine Kennung der Sendung 4, beispielsweise eine sog. Sendungsnummer, die auch zur Verfolgung der Sendung 4 dienen kann. Beispielsweise erfolgt die Erfassung der Daten der Sendung 4, insbesondere der Kennung, sowohl zu Zwecken der Sendungsverfolgung als auch zu dem Zweck, den Prozess, in dem der Person die Gelegenheit gegeben wird, die Bezahlung der Ware vorzunehmen.

Die erzeugte erste Information umfasst beispielsweise zumindest die Kennung der Sendung 4. Sie kann beispielsweise ferner eine Information enthalten, dass es sich bei der Sendung 4 um eine Sendung mit einer unbezahlten Ware handelt, was vom Server 2 dann beispielsweise im oben zu Fig. 3 diskutierten optionalen Schritt 302 verwertet werden kann. Diese Information kann ebenfalls in den Daten der Sendung 4 enthalten und entsprechend erfasst werden. Alternativ enthält die im Schritt 402 erzeugte erste Information keine derartige Information. Dann kann wie bereits erläutert im Server 2 im Schritt 302 der Fig. 3 anhand der Kennung der Sendung 4 und einer Datenbank festgestellt werden, ob es sich bei der Sendung 4, zu der erste Information erhalten wurde, um eine Sendung mit unbezahlter Ware handelt oder nicht.

Alternativ kann allerdings bereits im Schritt 401 der Fig. 4, in dem festgestellt wird, ob das Erzeugen von erster Information überhaupt erforderlich ist, festgestellt werden, dass bei Sendungen, die bezahlte Waren enthalten, keine erste Information erzeugt werden muss. Die Schritte 401 und 402 werden dann nicht ausgeführt, was insbesondere Rechenleistung und Übertragungskapazität einspart. Die erste Information wird dann nur für Sendungen mit unbezahlten Waren erzeugt. Der optionale Schritt 302 der Fig. 3 ist dann entbehrlich.

Die erste Information kann auch Information über die Vorrichtung, die die erste Information erzeugt und/oder die Daten von der Sendung 4 erfasst hat, und/oder über die mit der Vorrichtung assoziierte Station umfassen (z.B. eine Kennung der Vorrichtung und/oder der Station, und/oder den Ort der Vorrichtung und/oder der Station), und/oder eine Information zum Zeitpunkt der Erzeugung der ersten Information und/oder der Erfassung der Daten der Sendung 4.

Das Gerät 50 des Zustellers 5 kann den Schritt 402, also das Erzeugen der ersten Information, beispielsweise auch in Reaktion auf ein Bestimmen, dass der Abstand einer aktuellen Position des Geräts 50 zu der vorbestimmten Station, insbesondere der Zustellungsadresse, unter einen vorbestimmten Wert gesunken ist. Dies kann bei entsprechender Wahl des vorbestimmten Werts, beispielsweise (insbesondere je nach Größe des vom Zusteller bedienten Zustellbezirks) 1km, 500m, 100m oder 50m, um nur ein paar Werte zu nennen, ein klarer Indikator für den Server 2 sein, dass die Sendung 4 die vorbestimmte (letzte) Station nahezu erreicht hat und daher der Prozess, in dem der Person Gelegenheit gegeben wird, eine Bezahlung der Sendung vorzunehmen, ausgelöst werden sollte. Die Bezahlung der Sendung ist dann vorteilhaft im Zeitpunkt der Zustellung, also bei Erreichen der Zustellungsadresse durch den Zusteller 5, vorgenommen worden, insbesondere ohne Einbeziehung des Zustellers 5. Dieser wird lediglich gemäß Schritt 305 der Fig. 3 vom Server 2 (oder vom Empfänger 6) davon in Kenntnis gesetzt, dass die Bezahlung erfolgt ist, und kann die Sendung 4 zustellen (z.B. an den Empfänger 6 übergeben, oder in den Aufbewahrungsraum 7 einlegen, oder an eine Aufbewahrungsstelle zustellen, oder in das Lager 8 verbringen).

Beispielsweise ermittelt das Gerät 50 des Zustellers 5 regelmäßig oder unregelmäßig seine Position, insbesondere durch Empfang von Positionierungssignalen von Satelliten 14, und berechnet dann jeweils den Abstand zu denjenigen letzten Stationen, an denen Sendungen zugestellt werden sollen, die unbezahlte Waren enthalten. Wenn einer der Abstände unter den vorbestimmten Wert fällt (der für unterschiedliche letzte Stationen auch unterschiedlich definiert sein kann), werden dann die Schritte 402 und 403 ausgeführt. Alternativ kann das Gerät 50 des Zustellers 5 auch bei Empfang eines Funksignals, das von einer Vorrichtung am Ort der vorbestimmten Station ausgesendet wird und beispielsweise eine Kennung und/oder Adresse der vorbestimmten Station (und/oder eine Kennung der zuzustellenden Sendung) beinhaltet, davon ausgehen, dass der Abstand des Geräts 50 bzw. des Zustellers 5 zu der vorbestimmten Station unter einen vorbestimmten Wert (der beispielsweise mit der Reichweite des Funksignals korreliert) gesunken ist., und in Reaktion darauf die Schritte 402 und 403 ausführen.

Die erzeugte erste Information kann dann beispielsweise eine Kennung der Sendung 4 und/oder eine Kennung des Geräts und/oder eine Information zu der letzten Station und/oder ein aktueller Abstand zur letzten Station und/oder ein Zeitpunkt der Erzeugung der ersten Information und/oder des Bestimmens, dass der vorbestimmte Wert unterschritten wurde, enthalten. Die erzeugte erste Information kann ferner eine Information enthalten, dass die Sendung 4 eine unbezahlte Ware enthält.

Alternativ kann, wenn das Gerät 50 über keine Information verfügt, welche der Sendungen unbezahlte Waren enthalten, der jeweilige Abstand zu der jeweiligen letzten Station aller Sendungen, die der Zusteller 5 an einem Tag zuzustellen hat, regelmäßig oder unregelmäßig bestimmt werden. Wenn einer der Abstände unter den vorbestimmten Wert fällt (der für unterschiedliche letzte Stationen auch unterschiedlich definiert sein kann), werden dann die Schritte 402 und 403 ausgeführt. Die erzeugte erste Information kann dann beispielsweise eine Kennung der Sendung 4 und/oder eine Kennung des Geräts und/oder eine Information zu der letzten Station und/oder ein Abstand zur letzten Station und/oder ein Zeitpunkt der Erzeugung der ersten Information und/oder des Bestimmens, dass der vorbestimmte Wert unterschritten wurde, enthalten.

Anstelle des Geräts 50 kann auch der Server 5 oder eine andere Einheit den Abstand zwischen dem Gerät 50 des Zustellers und der letzten Station ermitteln und dann bei Unterschreiten des vorbestimmten Werts die erste Information erzeugen. Voraussetzung dafür ist, dass der Server 2 oder die andere Einheit Kenntnis über die Position des Geräts 50 haben. Dies kann beispielsweise durch regelmäßige oder unregelmäßige Übertragungen der vom Gerät 50 bestimmten Position des Geräts 50 an den Server 2 oder die andere Einheit erfolgen. Im Schritt 301 erhält dann beispielsweise eine erste (z.B. logische) Komponente des Servers 2 die erste Information von einer zweiten (z.B. logischen) Komponente des Servers 2.

Anstelle der Erfassungseinheiten 101, 111, 13 und dem Gerät 50 des Zustellers 5 kann die erste Information auch von einer Einheit, insbesondere einer Kontrolleinheit, des Aufbewahrungsraums 7 erzeugt werden, beispielsweise in Reaktion auf eine vorbestimmte Handlung des Empfängers 6 oder einer anderen Person (z.B. ein Start der Interaktion des Empfängers 6 oder der Person mit der Kontrolleinheit zur Entnahme der Sendung 4, oder eine erfolgreiche Authentisierung des Empfängers 6 oder der Person gegenüber der Kontrolleinheit), die die in den Aufbewahrungsraum 7 zugestellte Sendung 4 aus dem Aufbewahrungsraum 7 entnehmen möchte. Derartige erste Information indiziert dem Server 2, dass die Sendung 4 von der vorbestimmten (letzten) Station entfernt werden soll bzw. eine Änderung der Position der Sendung 4 relativ zur vorbestimmten (letzten) Station erfolgen soll. Die erste Information kann hier beispielsweise eine Kennung der Sendung 4 und/oder eine Kennung des Aufbewahrungsraums 7 und/oder der Vorrichtung, die den Aufbewahrungsraum 7 bereitstellt, und/oder eines Zeitpunkts des Erzeugens der ersten Information und/oder des Erfassens der vorbestimmten Handlung umfassen. Falls bekannt, kann auch eine Information, die angibt, ob die Sendung 4 eine unbezahlte Ware enthält, in der ersten Information enthalten sein. Allerdings kann, wie bereits ausgeführt, in Fällen, in denen der Kontrolleinheit bekannt ist, dass die Sendung 4 keine unbezahlte Ware enthält, das Erzeugen und Übertragen der ersten Information nicht ausgeführt werden. Beispielsweise ist eine Entnahme der Sendung 4 aus dem Aufbewahrungsraum 7 selbst bei erfolgreicher Authentisierung gegenüber der Kontrolleinheit erst möglich, wenn die Kontrolleinheit vom Server 2 informiert wurde (insbesondere durch Erhalten der zweiten Information gemäß Schritt 305 der Fig. 3), dass die Bezahlung der Ware als erfolgt angesehen wird. Bei dieser beispielhaften Ausführungsform der vorliegenden Erfindung kann beispielsweise die Zustellung der Sendung 4 in den Aufbewahrungsraum 7 bereits vor der Bezahlung der Ware erfolgen. Für die Entnahme der Sendung 4 aus dem Aufbewahrungsraum 7 ist dann allerdings eine erfolgte Bezahlung der Ware Bedingung. Dies ist für den Empfänger 6 bzw. die andere Person insoweit vorteilhaft, als dass der Zeitraum zwischen der Vornahme der Bezahlung und der Entgegennahme der Sendung aus dem Aufbewahrungsraum 7 so kurz wie möglich gestaltet wird. Vorteilhaft entfällt allerdings auch hier das Kassieren für den Zusteller und die Notwendigkeit einer Bezahlvorrichtung an der Vorrichtung, in der der Aufbewahrungsraum 7 enthalten ist.

Bei der Vorrichtung, die den Aufbewahrungsraum 7 enthält, kann es sich beispielsweise um eine Packstation handeln, aber alternativ auch um andere Vorrichtungen mit einem oder mehreren Aufbewahrungsräumen, zu denen der Zugang kontrolliert, also insbesondere vom Vorliegen einer erfolgten Bezahlung der Ware abhängig gemacht werden kann. Nicht abschließende Beispiele für derartige Vorrichtungen sind Paketkästen (einem oder mehreren Empfängern zugeordnete Empfangsbehälter für Pakete in unmittelbarer Nähe des Wohn- oder Geschäftssitzes der ein oder mehreren Empfänger) oder Fahrzeuge mit abschließbaren Räumen (z.B. Kofferräumen). Der Zugang kann beispielsweise von einer Zentrale kontrolliert werden und vom Vorliegen einer erfolgten Bezahlung abhängig gemacht werden. Beispielsweise wird ein Zugangscode, der zur Öffnung des Aufbewahrungsraums erforderlich ist, lediglich bei erfolgter Bezahlung der Sendung dem Empfänger 6 oder einer anderen Person zur Verfügung gestellt.

Bei der Beschreibung des Verfahrens 300 der Fig. 3 wurde beispielhaft davon ausgegangen, dass bei negativem Verlauf der Prüfung in Schritt 304, also bei Feststellung, dass die Bezahlung der Ware nicht als erfolgt angesehen wird, zum Schritt 306 gesprungen wird. Dies kann allerdings dazu führen, dass dem Zusteller 5 bei Ankunft an der letzten Station keine zweite Information vorliegt, er also die Sendung 4 mangels erfolgter Zahlung nicht zustellen darf oder er beispielsweise selbst beim Empfänger 6 kassieren muss. Um dies zu verhindern, kann bei negativer Prüfung im Schritt 304 nicht zum Schritt 306 verzweigt, sondern eine Fehlerbehandlung durchgeführt werden. Dies kann beispielsweise beinhalten, den Schritt 303 wiederholt, insbesondere mit einer vorbestimmten maximalen Zahl von möglichen Wiederholungen, auszuführen, beispielsweise noch zweimal. Wenn dann nach der maximalen Zahl von möglichen Wiederholungen, keine Bezahlung erfolgt ist, kann beispielsweise eine Information an die Person ausgegeben werden, dass ohne erfolgte Bezahlung der Ware keine Zustellung erfolgen kann und dass der Zustellungsprozess unterbrochen wird, bis die Zahlung erfolgt ist, und beispielsweise nach einer gesetzten First (z.B. 2 Wochen) die Sendung als unzustellbar zum Versender retourniert wird. Die Unterbrechung des Zustellungsprozesses kann vorteilhaft dadurch erfolgen, dass die Sendung 4 in ein Zwischenlager 18 gebracht wird, bis die Bezahlung erfolgt ist, und erst dann (oder nach fruchtlosem Ablauf der gesetzten Frist) wieder aus dem Zwischenlager 18 zur weiteren Verarbeitung geholt wird. Die Verbringung der Sendung 4 in ein Zwischenlager ist insbesondere vorteilhaft, wenn die erste Information im ersten Sortierzentrum 10 oder im zweiten Sortierzentrum 11, also an einer verhältnismäßig frühen Station in der Abfolge von Stationen, erfolgt, da hier ggf. einfacher Lagermöglichkeiten realisiert werden können und auch der Rückweg im Falle einer Retoure kürzer ist. Die an die Person ausgegebene Information kann des weiteren beispielsweise eine Information enthalten, wo die Ware außerhalb des in Schritt 303 ausgelösten Prozesses bezahlt werden kann, beispielsweise in einer Filiale des Zustellungsunternehmens, oder auf einer Webseite, zu der ein Link bereitgestellt wird. Wenn dann eine Bezahlung der Ware außerhalb des in Schritt 303 ausgelösten Prozesses innerhalb der gesetzten Frist erfolgt, kann der Schritt 305 der Fig. 3 ausgeführt werden und die Verarbeitung/Zustellung der Sendung 4 wieder aufgenommen werden.

Beispielhafte Details zum im Schritt 303 der Fig. 3 ausgelösten Prozess, in dem der Person Gelegenheit gegeben wird, die Bezahlung der Ware vorzunehmen, werden nun anhand des Flussdiagramm 500 der Fig, 5 beschrieben.

Zunächst wird im Schritt 501 geprüft, ob der Prozess ausgelöst wurde. Dies ist beispielsweise sinnvoll, wenn auf dem Server 2 mehrere parallel abzuarbeitende Threads ausgeführt werden.

Wenn dies der Fall ist, wird im Schritt 502 eine Anfrage an die Person ausgegeben, ob die Person die Ware bezahlen möchte. Die Anfrage kann beispielsweise mittels eines üblichen Nachrichtenformats, wie beispielsweise E-Mail, SMS, MMS, WhatsApp, etc. an ein Gerät der Person gerichtet werden, beispielsweise an das Gerät 60 des Empfängers 6. Die Anfrage kann auch speziell an ein Programm auf einem Gerät der Person, insbesondere an eine sog. App (insbesondere des Zustellungsunternehmens), gerichtet sein, die dann bei Erhalt der Anfrage gestartet wird und den Inhalt der Anfrage dem Nutzer anzeigt. Dazu kann beispielsweise der Apple Push Notification Service (APNS) für Apps auf Geräten mit iOS als Betriebssystem oder der Cloud-To-Device-Messaging (C2DM) oder Google Cloud Messaging (GCM) Dienst für Apps auf Geräten mit Android-Betriebssystem genutzt werden. Diese Dienste erlauben es einem Server wie beispielsweise dem Server 2, Nachrichten an eine App zu senden, beispielsweise wenn die App beim Server 2 registriert ist. Auch hier ist zum Ansprechen der App auf einem bestimmten Gerät eine die App auf dem Gerät (oder zumindest das Gerät) identifizierende Kennung oder Adresse erforderlich.

Eine für die Anfrage zu verwendende Kommunikationsadresse (z.B. eine E-Mail-Adresse, oder eine Mobilfunknummer, etc.) der Person (die beispielsweise der Empfänger 6 sein kann, aber auch eine andere Person, der die Bezahlung der Ware anstelle des Empfängers ermöglicht werden soll) ist beispielsweise am Server 2 in einer Datenbank hinterlegt, beispielsweise dergestalt, dass sie mit einer Kennung der Sendung 4 assoziiert ist und über die Kennung der Sendung 4 aus der Datenbank ermittelt werden kann. Diese Kommunikationsadresse oder eine mit dieser Kommunikationsadresse assoziierte (insbesondere anonymisierte) Kennung (z.B. eine Kundennummer) kann beispielsweise bei Aufgabe der Sendung 4 durch den Versender 3 dem Server 2 mitgeteilt worden sein (der Versender 3 hat die Kommunikationsadresse oder die damit assoziierte Kennung beispielsweise im Rahmen der Kaufabwicklung vom Käufer abgefragt). Diese Kommunikationsadresse ist dann beispielsweise am Server 2 mit einer Kennung der Sendung 4 assoziiert worden (wenn dem Server 2 lediglich eine mit der Kommunikationsadresse assoziierte Kennung mitgeteilt wurde, ist aus dieser die Kommunikationsadresse am Server 2 beispielsweise aus einer Datenbank gewinnbar, so dass auch in diesem Fall die Kennung der Sendung 4 am Server 2 mit dieser Kommunikationsadresse assoziiert werden kann).

Wenn vom Versender 3 keine Kommunikationsadresse oder eine damit assoziierte Kennung dem Server 2 mitgeteilt wird, kann der Server 2 die Kommunikationsadresse beispielsweise aus einer Datenbank gewinnen, in der postalische Adressinformationen Kommunikationsadressen zugeordnet sind. Beispielsweise kann dann aus den Informationen Name, Vorname und Anschrift, wie sie in der Zustellungsadresse der Sendung enthalten sind, eindeutig auf eine Kommunikationsadresse der mit dieser Zustellungsadresse assoziierten Person (insbesondere des Empfängers 6) geschlossen werden. Die Datenbank kann beispielsweise nur die Kommunikationsadressen von Personen enthalten, die sich zu diesem Zweck bei dem Zustellungsunternehmen registriert haben oder zumindest ihre Zustellungsadresse und die zugehörige Kommunikationsadresse hinterlegt haben. Die Datenbank kann allerdings auch Kommunikationsadressen enthalten, die ohne Zutun der jeweils mit der Kommunikationsadresse assoziierten Person beschafft wurden, beispielsweise aus Verzeichnissen, Telefonbüchern, etc.

Wenn die Anfrage an eine App auf einem Gerät der Person gerichtet werden soll, ist in der Regel eine Installation der App auf dem Gerät der Person erforderlich, in deren Rahmen sich die Person beispielsweise am Server 2 registrieren kann, so dass der Server 2 die App ansprechen kann. Der Server 2 hält dann beispielsweise eine Datenbank vor, in der zu den dergestalt registrierten Personen jeweils z.B. postalische Adressinformationen (Name, Vorname, Anschrift) und die zugehörige Kennung oder Adresse der App auf dem Gerät (oder zumindest des Geräts) der Person gespeichert sind. Somit kann beispielsweise mittels der Zustelladresse auf der Sendung 4 über die Datenbank die Kennung oder Adresse der App (oder zumindest des Geräts) bestimmt werden. Beispielsweise kann bei Aufgabe der Sendung 4 durch den Versender 3 aus der vom Versender 3 angegebenen Zustellungsadresse und der Datenbank die Kennung oder Adresse der App (oder zumindest des Geräts) ermittelt und mit einer Kennung der Sendung 4 assoziiert werden.

Die Anfrage des Schritts 502 kann beispielsweise Informationen zu der Ware beinhalten, insbesondere den Preis der Ware und/oder Informationen zum Versender/Verkäufer und/oder zum Gegenstand der Ware selbst. Diese Informationen können beispielsweise ebenfalls vom Versender 3 bei Aufgabe der Sendung 4 dem Server 2 mitgeteilt und dort, verknüpft mit der Kennung der Sendung 4, gespeichert worden sein.

Die Anfrage kann von der Person beispielsweise im gleichen Nachrichtenformat beantwortet werden, wie sie erhalten wurde, also beispielsweise als Antwort-E-Mail, Antwort-SMS, Antwort-MMS, Antwort-WhatsApp, etc. Wenn die Anfrage an eine App auf dem Gerät gerichtet wurde, kann beispielsweise die App eine Antwort-Funktionalität bereitstellen. Bei all diesen Varianten kann sich die für die Antwort zu verwendende Kommunikationsadresse (insbesondere des Servers 2) implizit aus der Anfrage ergeben, oder in der Anfrage angegeben sein (beispielsweise als "Reply-To"-Information bei einer E-Mail). Alternativ kann die Anfrage aber auch eine Verknüpfung, beispielsweise einen Uniform Resource Locator (URL), enthalten, deren verbundene Information (insbesondere eine Webseite) im Falle der Bereitschaft, die Bezahlung der Ware vorzunehmen, besucht werden kann.

Im Schritt 503 wird festgestellt, insbesondere anhand der Reaktion der Person auf die Anfrage, ob eine Bereitschaft der Person besteht, die Bezahlung der Ware vorzunehmen. Wenn dies nicht der Fall ist, springt das Verfahren zum Schritt 505. Anderenfalls wird im Schritt 504 die Bezahlung insbesondere automatisch für die Person durchgeführt, oder alternativ die Person bei der Bezahlung, insbesondere der Online-Bezahlung, der Ware unterstützt.

Die Bereitschaft der Person, die Bezahlung der Ware vorzunehmen, kann durch die Person beispielsweise durch positive Beantwortung der Anfrage vorgenommen werden, insbesondere in einem vorgegebenen Antwort-Format, das beispielsweise nur die Antworten "JA" und "NEIN" vorschreibt oder zulässt. Beispielsweise kann auf eine Anfrage-E-Mail oder SMS entsprechend mit einer E-Mail oder SMS geantwortet werden, die als Text im Körper der Nachricht nur die Information "JA" oder "NEIN" enthält. In ähnlicher Weise kann auch eine App, über die die Anfrage erhalten wird, gestaltet sein, also beispielsweise nur eine positive oder negative Antwort in einem vordefinierten Format zulassen. Wenn die Anfrage allerdings eine Verknüpfung beinhaltet, kann das Besuchen der mit der Verknüpfung verbundenen Information (insbesondere einer Webseite) als Bereitschaft, die Bezahlung vorzunehmen, aufgefasst werden. Ein derartiges Besuchen durch Verwendung der Verknüpfung kann mittels bekannter Tracking-Verfahren erfasst werden. Dabei ist es natürlich möglich, anstelle nur einer Verknüpfung zwei Verknüpfungen vorzusehen, wobei bei Besuchen der mit einer der beiden Verknüpfungen verbundenen Information von einer Bereitschaft der Person, die Bezahlung der Ware vorzunehmen, ausgegangen wird, und bei Besuchen der mit der anderen der beiden Verknüpfungen verbundenen Information von keiner Bereitschaft der Person, die Bezahlung der Ware vorzunehmen, ausgegangen wird.

Wenn im Schritt 504 die Bezahlung automatisch für die Person durchgeführt wird, kann dies beispielsweise ohne weitere Handlungen der Person erfolgen. Die Person hat dann durch die positive Antwort auf die Anfrage ihre Zustimmung zur Vornahme der Bezahlung gegeben. Die Bezahlung wird dann beispielsweise durch den Server 2 durchgeführt. Beispielsweise verwendet der Server 2 dazu Zahlungsinformationen, die die Person zuvor, insbesondere im Rahmen einer Registrierung, am Server 2 hinterlegt hat.

Der Server 2 kann beispielsweise eingerichtet sein, die Bezahlung für die Person (insbesondere automatisch) mittels einer (beispielsweise von der Person vorab ausgewählten) der folgenden Bezahlungsmethoden auszuführen: Bezahlung basierend auf Kreditkarteninformationen, Bezahlung per Lastschrift, Bezahlung per Überweisung, Bezahlung über einen Bezahlsystem-Anbieter (z.B. PayPal), bei dem die Person ein Konto besitzt, Bezahlung per PrePaid-Kreditkarte oder PrePaid-Code oder Bezahlung per Mobiltelefon-Rechnung.

Der Server 2 kann beispielsweise die Funktion eines bei Online-Shops üblichen Zahlungsdienstleisters übernehmen, also dem Käufer die Bezahlung der Ware gemäß einer oder mehrerer Bezahlungsmethoden ermöglichen. Allerdings greift der Server 2 dabei auf hinterlegte Zahlungsinformationen der Person zurück, anstatt diese bei jeder Bezahlung neu von der Person abzufragen. Bevorzugt werden die Zahlungen nicht auf das Konto des Versenders 3, sondern auf ein oder mehrere Konten des Zustellungsunternehmens gutgeschrieben und dann beispielsweise erst in einem nachgelagerten Prozess von diesen Konten dem jeweiligen Versender 3 gutgeschrieben. Dies kann den Bezahlungsprozess vereinfachen und/oder beschleunigen, da im Zeitpunkt der Bezahlung nicht sendungsspezifische/versenderspezifische Konteninformationen berücksichtigt werden müssen. Der Server 2 kommuniziert bei der Abwicklung der Bezahlung mit Servern von Banken 15, Kreditkartenunternehmen 16 oder Bezahldienstleistern 17. Diese Server können beispielsweise Bezahlungsschnittstellen (sog. Payment Gateways) zur Verfügung stellen, mittels denen Bezahlungen vorgenommen werden können.

Soll die Bezahlung beispielsweise per Kreditkarteninformationen erfolgen, hat sich das Zustellungsunternehmen (das den Server 2 betreibt), beispielsweise bei einem Kreditkartenunternehmen registriert und eine Vertragsnummer erhalten. Zur Vornahme der Bezahlung leitet der Server 2 diese Vertragsnummer, die am Server 2 hinterlegten Kreditkarteninformationen (z.B. Kreditkartennummer und ggf. Sicherheitsnummer oder weitere Informationen) der Person und Angaben zur Höhe des Betrags an den Server des Kreditkartenunternehmens 16 weiter, der Zugriff auf das Kreditkartenkonto der Person hat und die entsprechende Transaktion (Gutschrift des Betrags vom Konto der Person auf das Konto des Zustellungsunternehmens) ausführt.

Soll die Bezahlung beispielsweise per Lastschrift erfolgen, überträgt der Server 2 die am Server 2 hinterlegten Kontoinformationen (insbesondere Kontonummer und Bankleitzahl) sowie die Kontoinformationen des Zustellungsunternehmens an den Server der Bank 15 des Zustellungsunternehmens. Die Bank des Zustellungsunternehmens zieht die Lastschrift dann von der Bank der Person ein und schreibt sie dem Konto des Zustellungsunternehmens gut.

Wenn die Person jeweilige Zahlungsinformationen hinterlegt hat, kann der Server 2 auch Bezahlungen gemäß anderen Zahlungsmethoden durchführen (beispielsweise Bezahlungen über Bezahldienstleister, wenn die Zugangsdaten zum Konto der Person bei einem Bezahldienstleister am Server 2 hinterlegt sind).

Anstatt die Funktion des Zahlungsdienstleiters selbst zu übernehmen, kann der Server 2 diese Funktionalität allerdings auch zumindest teilweise von einem Zahlungsdienstleister ausfüllen lassen, der dann beispielsweise vom Server 2 mit den zur Vornahme der Zahlung erforderlichen Informationen versorgt wird und die Kommunikation mit den Servern 15, 16 oder 17 übernimmt.

Alternativ kann der Person auch angeboten werden, ein eigenes Konto beim Server 2 zu führen, dass bei Vorliegen der Bereitschaft der Person, eine Ware zu bezahlen, entsprechend direkt belastet wird. Die Person kann dieses Konto dann beispielsweise mittels Überweisung "aufladen". Der Person kann auch ein gewisser Kreditrahmen eingeräumt werden, falls die Bezahlung einer Ware durch den aktuellen Kontostand nicht gedeckt ist. Auch in dieser Alternative kann die Bezahlung der Ware im Schritt 504 des Verfahrens 500 also automatisch durchgeführt werden.

Im Schritt 504 des Verfahrens 500 ist als Variante vorgesehen, dass die Person bei der Vornahme der Bezahlung durch den Server 2 unterstützt wird. Dies kann beispielsweise dadurch bewerkstelligt werden, dass der Server 2 die Funktion eines bei Online-Shops üblichen Zahlungsdienstleisters übernimmt, aber die Zahlungen nicht basierend auf hinterlegten Zahlungsinformationen der Person ausführt, sondern diese Zahlungsinformationen in einem Dialog von der Person abfragt. Die Person erhält dabei einen höheren Grad an Kontrolle über den Bezahlungsvorgang und muss keine Zahlungsinformationen am Server 2 hinterlegen. Sobald die Zahlungsinformationen (beispielsweise Kreditkarteninformationen im Falle einer Bezahlung per Kreditkarte) von der Person angegeben wurden, kann der Server 2 die Bezahlung dann wie oben beschrieben in Kommunikation mit den Servern 15,16 oder 17 ausführen. Das Spektrum von Bezahlungsmethoden kann in dieser Variante noch umfangreicher sein als bei der automatischen Vornahme der Bezahlung durch den Server 2, da die Einbeziehung der Person in den Bezahlungsprozess möglich ist. Beispielsweise können dann auch Bezahlungsmethoden wie Bezahlung per Geldkarte (bei der üblicherweise eine Geldkarte in ein an ein Gerät der Person angeschlossenes Kartenlesegerät eingeführt und an diesem Kartenlesegerät eine PIN eingegeben werden muss) oder Bezahlung per Überweisung (bei der in der Regel ein transaktionsspezifischer Code, wie etwa eine mTAN oder Photo-TAN, auf einem separaten Kommunikationskanal im Zeitpunkt der Bezahlung an die Person geliefert wird und von dieser zur Vollendung der Transaktion angegeben werden muss), um nur ein paar Beispiele zu nennen, unterstützt werden.

Auch in dieser Variante kann der Server 2 die Funktionalität des Zahlungsdienstleisters zumindest teilweise nicht selbst implementieren, sondern von einem Zahlungsdienstleister ausfüllen lassen. Der Zahlungsdienstleister wird dann vom Server 2 mit den dort vorhandenen Informationen versorgt und holt die fehlenden Informationen von der Person ein.

Die Unterstützung der Person bei der Vornahme der Bezahlung kann beispielsweise mittels der App auf dem Gerät der Person erfolgen, mit der auch die Anfrage im Schritt 502 an die Person gerichtet werden kann. Insbesondere kann weitere von der Person zur Vornahme der Bezahlung erforderliche Information über die App von der Person abgefragt werden. Alternativ kann die Unterstützung der Person bei der Vornahme der Bezahlung auch dadurch erfolgen, dass die Person eine Verknüpfung, insbesondere eine URL, übermittelt bekommt, die mit einer Informationsseite, insbesondere einer Webseite, assoziiert ist. Auf dieser Webseite kann die Person bei der Vornahme der Bezahlung unterstützt werden. Beispielsweise kann aus mehreren Bezahlungsmethoden eine Bezahlungsmethode ausgewählt und dann gemäß der ausgewählten Bezahlungsmethode der Bezahlungsvorgang interaktiv ausgeführt werden. Alternativ kann nur eine Bezahlungsmethode möglich sein oder eine Bezahlungsmethode als für die Person bevorzugt abgespeichert sein.

Im Schritt 505 wird schließlich geprüft, ob das Verfahren 500 abgebrochen werden soll. Wenn dies der Fall ist, erfolgt der Abbruch, anderenfalls springt das Verfahren zurück zum Schritt 501.

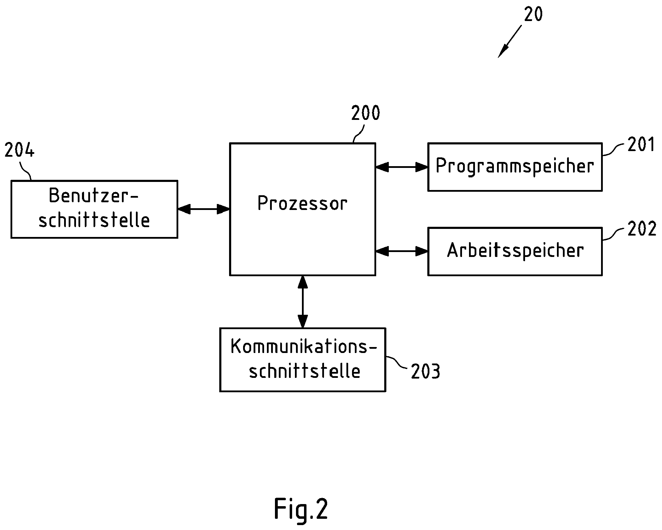

Fig. 2 zeigt schließlich eine schematische Darstellung einer beispielhaften Ausführungsform einer Vorrichtung 20 gemäß dem ersten oder zweiten Aspekt der Erfindung.

Die Vorrichtung 20 kann beispielsweise eine Vorrichtung gemäß dem ersten Aspekt der Erfindung verkörpern und dann zur Ausführung und/oder Steuerung des Verfahrens 300 der Fig. 3 ausgebildet sein, also insbesondere als Server 2 oder als ein Teil davon. Alternativ kann die Vorrichtung 20 eine Vorrichtung gemäß dem zweiten Aspekt der Erfindung verkörpern und dann zur Ausführung und/oder Steuerung des Verfahrens 400 der Fig. 4 ausgebildet sein, also insbesondere als eine der Erfassungseinheiten 101, 111 oder 13, als das Gerät 50 des Zustellers 5 oder als eine Kontrolleinheit des Aufbewahrungsraums 7 (oder jeweils als ein Teil davon).

Vorrichtung 20 umfasst einen Prozessor 200 mit zugeordnetem Arbeitsspeicher 202 und Programmspeicher 201. Der Prozessor 200 führt beispielsweise Programmanweisungen aus, die im Programmspeicher 201 gespeichert sind. Die Programmanweisungen führen das Verfahren gemäß dem ersten Aspekt oder dem zweiten Aspekt der Erfindung aus und/oder steuern dieses. Damit enthält der Programmspeicher 201 ein Computerprogramm nach dem ersten oder zweiten Aspekt der Erfindung und stellt ein Computerprogrammprodukt zu dessen Speicherung dar.

Der Programmspeicher 201 kann beispielsweise ein persistenter Speicher, wie beispielsweise ein Read-Only-Memory (ROM)-Speicher sein. Der Programmspeicher 201 kann beispielsweise fest mit dem Prozessor 200 verbunden sein, kann aber alternativ auch lösbar mit dem Prozessor 200 verbunden sein, beispielsweise als Speicherkarte, Diskette oder optisches Datenträgermedium (z.B. eine CD oder DVD). In dem Programmspeicher 201, oder in einem separaten Speicher, können auch weitere Informationen abgespeichert sein.

Der Arbeitsspeicher 202 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

Der Prozessor 200 ist ferner operativ mit einer Kommunikationsschnittstelle 203 verbunden, mit der beispielsweise ein Informationsaustausch mit anderen Vorrichtungen möglich ist (siehe hierzu die gestrichelten Pfeile in Fig. 1). Die Kommunikation mit den anderen Vorrichtungen kann drahtgebunden oder zumindest abschnittsweise drahtlos erfolgen.

Die Vorrichtung 20 kann auch weitere Komponenten enthalten. Falls Vorrichtung 20 beispielsweise das Gerät 50 des Zustellers repräsentiert, kann die optionale Benutzerschnittstelle 204 vorgesehen sein, die von dem Prozessor 200 gesteuert wird und die Interaktion des Zustellers mit der Vorrichtung 20 erlaubt.

Die in dieser Spezifikation beschriebenen beispielhaften Ausführungsformen / Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Erhalten von erster Information, aus der folgt, dass sich eine Position einer Sendung relativ zu einer vorbestimmten Station aus einer Abfolge von Stationen, an die die Sendung während eines Zustellungsprozesses der Sendung jeweils gelangt, geändert hat oder dass eine Änderung der Position der Sendung relativ zu der vorbestimmten Station erfolgen soll, wobei die Sendung eine noch nicht bezahlte Ware enthält; und
- Auslösen eines Prozesses, in welchem einer Person Gelegenheit gegeben wird, eine Bezahlung der Ware vorzunehmen, in Reaktion auf das Erhalten der ersten Information.

2. Verfahren, umfassend:
- Erzeugen von erster Information, aus der folgt, dass sich eine Position einer Sendung relativ zu einer vorbestimmten Station aus einer Abfolge von Stationen, an die die Sendung während eines Zustellungsprozesses der Sendung jeweils gelangt, geändert hat oder dass eine Änderung der Position der Sendung relativ zu der vorbestimmten Station erfolgen soll, wobei die Sendung eine noch nicht bezahlte Ware enthält; und
- Ausgeben der ersten Information an eine Vorrichtung, die eingerichtet ist, einen Prozess, in welchem einer Person Gelegenheit gegeben wird, eine Bezahlung der Ware vorzunehmen, in Reaktion auf ein Erhalten der ersten Information auszulösen.

3. Verfahren nach einem der vorhergehenden Ansprüche, wobei aus der ersten Information folgt, dass die Sendung die vorbestimmte Station erreicht hat, und wobei die vorbestimmte Station die letzte Station der Abfolge von Stationen ist, insbesondere die Adresse, an der die Sendung zugestellt werden soll.

4. Verfahren nach Anspruch 3, wobei die erste Information in Reaktion auf ein Erfassen von Daten der Sendung erzeugt wird, wobei das Erfassen an der vorbestimmten Station mit einem Gerät eines Zustellers der Sendung erfolgt.

5. Verfahren nach einem der Ansprüche 1-2, wobei aus der ersten Information folgt, dass die Sendung die vorbestimmte Station nahezu erreicht hat, und wobei die vorbestimmte Station die letzte Station der Abfolge von Stationen ist, insbesondere die Adresse, an der die Sendung zugestellt werden soll.

6. Verfahren nach Anspruch 5, wobei die erste Information in Reaktion auf ein Erfassen, insbesondere durch ein dem Zusteller zugeordnetes Gerät, insbesondere ein tragbares Gerät des Zustellers oder ein zumindest zeitweise in einem Fahrzeug des Zustellers installiertes Gerät, des Eintritts der Sendung oder eines Zustellers der Sendung in einen die vorbestimmte Station enthaltenden vorbestimmten Bereich oder in Reaktion auf ein Erfassen, insbesondere durch ein dem Zusteller zugeordnetes Gerät, insbesondere ein tragbares Gerät des Zustellers oder ein zumindest zeitweise in einem Fahrzeug des Zustellers installiertes Gerät, dass der Abstand der Sendung oder eines Zustellers der Sendung zu der vorbestimmten Station einen vorbestimmten Wert unterschritten hat, erzeugt wird,

7. Verfahren nach einem der Ansprüche 1-2, wobei aus der ersten Information folgt, dass die Sendung die vorbestimmte Station erreicht oder verlassen hat, und wobei es sich bei der vorbestimmten Station nicht um die letzte Station der Abfolge von Stationen und insbesondere nicht um die Adresse, an der die Sendung zugestellt werden soll handelt, oder wobei die vorbestimmte Station eine Sortierstation ist, an der die Sendung während des Zustellprozesses zusammen mit anderen Sendungen sortiert wird.

8. Verfahren nach Anspruch 7, wobei die erste Information in Reaktion auf ein Erfassen von Daten der Sendung erzeugt wird, wobei das Erfassen an der vorbestimmten Station automatisch erfolgt.

9. Verfahren nach einem der Ansprüche 1-2, wobei aus der ersten Information folgt, dass die Sendung von der vorbestimmten Station entfernt werden soll, und wobei die vorbestimmte Station einen verschlossenen Raum umfasst, in den die Sendung insbesondere zur Abholung durch einen Empfänger der Sendung verbracht wurde.

10. Verfahren nach Anspruch 9, wobei die erste Information in Reaktion auf ein Erfassen eines vorbestimmten Schritts eines Prozesses, in dem sich eine Person Zugang zu dem verschlossenen Raum zur Entnahme der Sendung verschafft, erzeugt wird, wobei insbesondere der vorbestimmte Schritt von einer mit dem verschlossenen Raum assoziierten Vorrichtung, insbesondere einer Vorrichtung, die den Zugang zu dem verschlossenen Raum kontrolliert, erfasstwird.

11. Verfahren nach einem der vorhergehenden Ansprüche, soweit auf Anspruch 1 rückbezogen, ferner umfassend:
- Ausgeben von zweiter Information in Reaktion darauf, dass die Bezahlung der Ware als erfolgt angesehen wird, insbesondere an den Zusteller der Sendung oder ein Gerät des Zustellers der Sendung oder an den Empfänger der Sendung oder ein Gerät des Empfängers der Sendung.

12. Verfahren nach Anspruch 11, wobei die zweite Information an den Empfänger der Sendung oder ein Gerät des Empfängers der Sendung ausgegeben wird, und wobei die zweite Information oder eine daraus abgeleitete Information zum Nachweis der als erfolgt angesehenen Bezahlung der Ware gegenüber dem Zusteller oder einem Gerät des Zustellers dient.

13. Verfahren nach einem der vorhergehenden Ansprüche, wobei der Prozess zumindest folgendes umfasst:
- Ausgeben einer Anfrage, ob eine Person, die insbesondere der Empfänger der Sendung und/oder der Käufer der Ware ist, die Ware bezahlen möchte, an die Person;
- falls aus einer Reaktion der Person auf die Anfrage folgt, dass die Person die Ware bezahlen möchte, Durchführen der Bezahlung der Ware für die Person, insbesondere basierend auf gespeicherten Zahlungsinformationen der Person, oder Unterstützen der Person bei der Bezahlung der Ware, insbesondere durch eine Softwareanwendung auf einem Gerät der Person oder mittels einer insbesondere interaktiven Webseite.

14. Vorrichtung oder System, das mehrere Vorrichtungen umfasst, wobei die Vorrichtung(en) eingerichtet ist/sind zur Ausführung und/oder Steuerung des Verfahrens nach einem der Ansprüche 1-13 oder Mittel zur Ausführung und/oder Steuerung der Schritte des Verfahrens nach einem der Ansprüche 1-13 aufweist/aufweisen.

15. Computerprogramm, umfassend Programmanweisungen, die einen Prozessor zur Ausführung und/oder Steuerung des Verfahrens gemäß einem der Ansprüche 1-13 veranlassen, wenn das Computerprogramm auf dem Prozessor läuft.
